(19) Europäisches Patentamt
European Patent Office
Office européen des brevets

(11) **EP 4 753 363 A1**

(12) **EUROPEAN PATENT APPLICATION**
published in accordance with Art. 153(4) EPC

(43) Date of publication:
**03.06.2026 Bulletin 2026/23**

(21) Application number: **24845862.2**

(22) Date of filing: **08.07.2024**

(51) International Patent Classification (IPC):
**H04W 76/15** (2018.01)  **H04W 72/12** (2023.01)
**H04W 72/50** (2023.01)  **H04W 72/1263** (2023.01)
**H04W 84/06** (2009.01)  **H04W 88/06** (2009.01)

(52) Cooperative Patent Classification (CPC):
**H04W 72/12; H04W 72/1263; H04W 72/50;**
**H04W 76/15; H04W 84/06; H04W 88/06**

(86) International application number:
**PCT/KR2024/009648**

(87) International publication number:
**WO 2025/023558 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.07.2023 KR 20230096088**

(71) Applicant: **Electronics and Telecommunications
Research Institute
Daejeon 34129 (KR)**

(72) Inventor: **NOH, Hoon Dong
Daejeon 34129 (KR)**

(74) Representative: **Betten & Resch
Patent- und Rechtsanwälte PartGmbB
Maximiliansplatz 14
80333 München (DE)**

(54) **METHOD AND APPARATUS FOR MULTIPLE CONNECTIONS IN COMMUNICATION SYSTEM**

(57)    Disclosed are a method and an apparatus for multiple connections in a communication system. The method of a terminal includes the steps of: performing a connection procedure with each of a first network and a second network on the basis of a multi-connectivity function; performing uplink communication with the first network and the second network; calculating a power reduction in the uplink communication with respect to at least one of the first network or the second network; and determining whether to perform the uplink communication on the basis of the power reduction.

FIG. 16

**Description**

## CROSS-REFERENCE TO RELATED APPLICATIONS

This application claims priority to Korean Patent Applications No. 10-2023-0096088, filed on July 24, 2023, with the Korean Intellectual Property Office (KIPO), the entire contents of which are hereby incorporated by reference.

## BACKGROUND

**1. Technical Field**

The present disclosure relates to a technique for multi-connectivity, and more particularly, to a multi-connectivity technique based on aggregation between a terrestrial network (TN) and a non-terrestrial network (NTN) or aggregation between a first NTN and a second NTN.

**2. Related Art**

A communication system can be designed considering various scenarios, service requirements, potential system compatibility, and the like. In 5G communication systems (e.g., new radio (NR) communication systems) and/or beyond 5G communication systems (e.g., 6G communication systems), not only terrestrial network (TN) communication but also non-terrestrial network (NTN) communication is being discussed. It is expected that the TN communication and/or the NTN communication will be performed. NTN communication can be performed using satellites and/or aerial vehicles. NTN communication can be performed based on a different scheme from the TN communication. A terminal can perform TN communication or NTN communication. Alternatively, depending on a communication situation, there may be a need for the terminal to use both TN communication and NTN communication. In the above-described situation, methods for the terminal to use both TN communication and NTN communication may be required.

## SUMMARY

The present disclosure for resolving the above-described problems is directed to providing a method and an apparatus for multi-connectivity based on aggregation between a terrestrial network (TN) and a non-terrestrial network (NTN) or aggregation between a first NTN and a second NTN.
A method of a terminal, according to exemplary embodiments of the present disclosure for achieving the above-described objective, may comprise: performing a connection procedure with each of a first network and a second network based on a multi-connectivity function; performing uplink communication with the first network and the second network; calculating a power reduction value of the uplink communication for at least one of the first network or the second network; and deciding whether to perform the uplink communication based on the power reduction value.
When the power reduction value is less than a threshold, the uplink communication may be determined to continue to be performed, and when the power reduction value is equal to or greater than the threshold, the uplink communication may be determined to be stopped.
The stopped uplink communication may be at least one of uplink communication in a secondary cell (SCell) of the first network or uplink communication in an SCell of the second network.
The method may further comprise: receiving configuration information of the threshold from at least one of the first network or the second network, wherein the configuration information may include at least one of a first threshold for the first network, a second threshold for the second network, or a common threshold for both the first network and the second network.
The method may further comprise: in response to the power reduction value being greater than a threshold, determining whether an external power source is available, wherein when the external power source is available, the uplink communication may be performed using the external power source, and when the external power source is not available, the uplink communication may be stopped.
Each of the first network and the second network may be a terrestrial network (TN) or a non-terrestrial network (NTN).
Network structures of the first network and the second network may be determined independently, and the network structure may be determined based on at least one of component carrier (CC) configuration, carrier group (CG) configuration, cell configuration, satellite type, presence or absence of a relay, or link direction.
A link between the terminal and a transparent-type satellite may be established in a first type of the network structure, a link between the terminal and a regenerative-type satellite may be established in a second type of the network structure, a link between the terminal and a relay and a link between the relay and a transparent-type satellite may be established in a third type of the network structure, and a link between the terminal and a relay and a link between the relay and a regenerative-type satellite may be established in a fourth type of the network structure.

A method of a terminal, according to exemplary embodiments of the present disclosure for achieving the above-described objective, may comprise: performing a connection procedure with each of a first network and a second network based on a multi-connectivity function; performing downlink communication with the first network and the second network; transmitting necessary information for aligning reception powers for the downlink communication to at least one of the first network and the second network; receiving information on a reception power range from at least one of the first network or the second network; and receiving signals having reception powers falling within the reception power range from the first network and the second network.

The necessary information may include at least one of channel state information (CSI) or information on a reception power range desired by the terminal.

When the first network is a terrestrial network (TN) and the second network is a non-terrestrial network (NTN), the necessary information may be transmitted to the second network.

Network structures of the first network and the second network may be determined independently, and the network structure may be determined based on at least one of component carrier (CC) configuration, carrier group (CG) configuration, cell configuration, satellite type, presence or absence of a relay, or link direction.

A link between the terminal and a transparent-type satellite may be established in a first type of the network structure, a link between the terminal and a regenerative-type satellite may be established in a second type of the network structure, a link between the terminal and a relay and a link between the relay and a transparent-type satellite may be established in a third type of the network structure, and a link between the terminal and a relay and a link between the relay and a regenerative-type satellite may be established in a fourth type of the network structure.

A terminal, according to exemplary embodiments of the present disclosure for achieving the above-described objective, may comprise: at least one processor, and the at least one processor may causes the terminal to perform: performing a connection procedure with each of a first network and a second network based on a multi-connectivity function; performing uplink communication with the first network and the second network; calculating a power reduction value of the uplink communication for at least one of the first network or the second network; and deciding whether to perform the uplink communication based on the power reduction value.

When the power reduction value is less than a threshold, the uplink communication may be determined to continue to be performed, and when the power reduction value is equal to or greater than the threshold, the uplink communication may be determined to be stopped.

The stopped uplink communication may be at least one of uplink communication in a secondary cell (SCell) of the first network or uplink communication in an SCell of the second network.

The at least one processor may further cause the terminal to perform: in response to the power reduction value being greater than a threshold, determining whether an external power source is available, wherein when the external power source is available, the uplink communication may be performed using the external power source, and when the external power source is not available, the uplink communication may be stopped.

The at least one processor may further cause the terminal to perform: performing downlink communication with the first network and the second network; transmitting necessary information for aligning reception powers for the downlink communication to at least one of the first network and the second network; receiving information on a reception power range from at least one of the first network or the second network; and receiving signals having reception powers falling within the reception power range from the first network and the second network.

The necessary information may include at least one of channel state information (CSI) or information on a reception power range desired by the terminal.

When the first network is a terrestrial network (TN) and the second network is a non-terrestrial network (NTN), the necessary information may be transmitted to the second network.

According to the present disclosure, a downlink network structure and an uplink network structure can be independently configured in consideration of a non-terrestrial network (NTN) environment. For example, the downlink network structure and the uplink network structure can be configured differently. Considering the NTN environment, the network structure can be independently configured for each component carrier (CC), carrier group (CG), and/or cell. For example, the network structure can be configured differently for each CC, CG, and/or cell. To compensate for uplink propagation loss in consideration of the NTN environment, methods for controlling a transmission gain of a relay (or repeater) can be provided. For a case where a terminal performs dual-connectivity (DC) operations between terrestrial network (TN) and NTN or between NTNs, methods for controlling uplink transmission based on a power reduction value and/or an external power source can be provided. For the case where a terminal performs DC operations between TN and NTN or between NTNs, methods for requesting alignment of downlink reception powers to reduce a dynamic range can be provided. The effects that can be obtained by the present disclosure are not limited to the above-described effects. Other effects not mentioned above will be clearly understood by those of ordinary skill in the technical field to which the present disclosure pertains, based on the exemplary embodiments of the present disclosure.

## BRIEF DESCRIPTION OF DRAWINGS

FIG. 1 is a conceptual diagram illustrating exemplary embodiments of a communication system.

FIG. 2 is a block diagram illustrating exemplary embodiments of a communication node constituting a communication system.

FIG. 3 is a conceptual diagram illustrating exemplary embodiments of a radio interface protocol structure in a communication system.

FIG. 4 is a conceptual diagram illustrating an exemplary embodiment of time resources in which radio signals are transmitted in a communication system.

FIG. 5 is a conceptual diagram illustrating a time difference between a reception timing of an i-th downlink frame and a transmission timing of an i-th uplink frame in an exemplary embodiment of a communication system.

FIG. 6 is a conceptual diagram illustrating exemplary embodiments of a time/frequency resource grid of a communication system.

FIG. 7 is a conceptual diagram illustrating exemplary embodiments of a synchronization signal and physical broadcast channel (SS/PBCH) block or synchronization signal block (SSB) of a communication system.

FIG. 8 is a conceptual diagram illustrating common delays in an NTN environment.

FIGS. 9A to 9D are conceptual diagrams illustrating various forms of a 3D space communication system.

FIGS. 10A and 10B are conceptual diagrams illustrating exemplary embodiments of multi-connectivity in an NTN environment.

FIG. 11 is a conceptual diagram illustrating an environment in which TN and NTN coexist.

FIG. 12 is a conceptual diagram illustrating a downlink network structure and an uplink network structure in the NTN environment.

FIGS. 13A and 13B are conceptual diagrams illustrating a network structure for each CC, carrier group, and/or cell.

FIG. 14 is a conceptual diagram illustrating a compensation operation for an uplink propagation loss.

FIG. 15A is a flowchart illustrating a method for adjusting a transmission power of a terminal in a DC scenario.

FIG. 15B is a flowchart illustrating a method for adjusting a transmission power of a terminal in a DC scenario.

FIG. 16 is a flowchart illustrating a method for adjusting a transmission power of a terminal in a DC scenario.

FIGS. 17 and 18 are conceptual diagrams illustrating a method for aligning downlink reception powers based on multi-connectivity.

FIG. 19 is a flowchart illustrating a method for controlling uplink transmission based on multi-connectivity.

FIG. 20 is a flowchart illustrating a method for controlling a downlink reception power based on multi-connectivity.

## DETAILED DESCRIPTION OF THE EMBODIMENTS

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted.

A communication network to which exemplary embodiments according to the present disclosure are applied will be described. The communication system may be a non-terrestrial network (NTN), a 4G communication network (e.g., long-term evolution (LTE) communication network), a 5G communication network (e.g., new radio (NR) communication network), a 6G communication network, or the like. The 4G communication network, 5G communication network, and 6G communication network may be classified as terrestrial networks, when base stations and terminals are all located in terrestrial locations.

The NTN may operate based on the LTE technology and/or the NR technology. The NTN may support communications in frequency bands below 6 GHz as well as in frequency bands above 6 GHz. The 4G communication network may support communications in the frequency band below 6 GHz. The 5G communication network may support communications in the frequency band below 6 GHz as well as in the frequency band above 6 GHz. The communication network to which the exemplary embodiments according to the present disclosure are applied is not limited to the contents described below, and the exemplary embodiments according to the present disclosure may be applied to various communication networks. Here, the communication network may be used in the same sense as the communication system.

In the present disclosure, "configuration of an operation (e.g., transmission operation)" may refer to signaling of "control information (e.g., information element, parameter) for the operation" and/or "information indicating to perform the operation". "An information element (e.g., parameter) is configured" may mean that the corresponding information element is signaled. In the present disclosure, signaling may be at least one of system information (SI) signaling (e.g., transmission of a system information block (SIB) and/or master information block (MIB)), RRC signaling (e.g., transmission of RRC parameters and/or higher layer parameters), MAC control element (CE) signaling, or PHY signaling (e.g., transmission of downlink control information (DCI), uplink control information (UCI), and/or sidelink control information (SCI)).

Throughout the present disclosure, a network may include, for example, a wireless Internet such as wireless fidelity (WiFi), mobile Internet such as a wireless broadband Internet (WiBro) or a world interoperability for microwave access (WiMax), 2G mobile communication network such as a global system for mobile communication (GSM) or a code division multiple access (CDMA), 3G mobile communication network such as a wideband code division multiple access (WCDMA) or a CDMA2000, 3.5G mobile communication network such as a high speed downlink packet access (HSDPA) or a high speed uplink packet access (HSUPA), 4G mobile communication network such as a long term evolution (LTE) network or an LTE-Advanced network, 5G mobile communication network, beyond 5G (B5G) mobile communication network (e.g., 6G mobile communication network), or the like.

Throughout the present disclosure, a terminal may refer to an access terminal, mobile terminal, station, subscriber station, mobile station, portable subscriber station, node, device, or the like.

Here, a desktop computer, laptop computer, tablet PC, wireless phone, mobile phone, smart phone, smart watch, smart glass, e-book reader, portable multimedia player (PMP), portable game console, navigation device, digital camera, digital multimedia broadcasting (DMB) player, digital audio recorder, digital audio player, digital picture recorder, digital picture player, digital video recorder, digital video player, or the like having communication capability may be used as the terminal.

Throughout the present disclosure, the base station may refer to a node B (NodeB), evolved node B (eNB), 5G node B (gNB), base transceiver station (BTS), radio base station, radio transceiver, access point, access node, road side unit (RSU), digital unit (DU), cloud digital unit (CDU, radio remote head (RRH), radio unit (RU), transmission point (TP), transmission and reception point (TRP), relay node, repeater node, or the like.

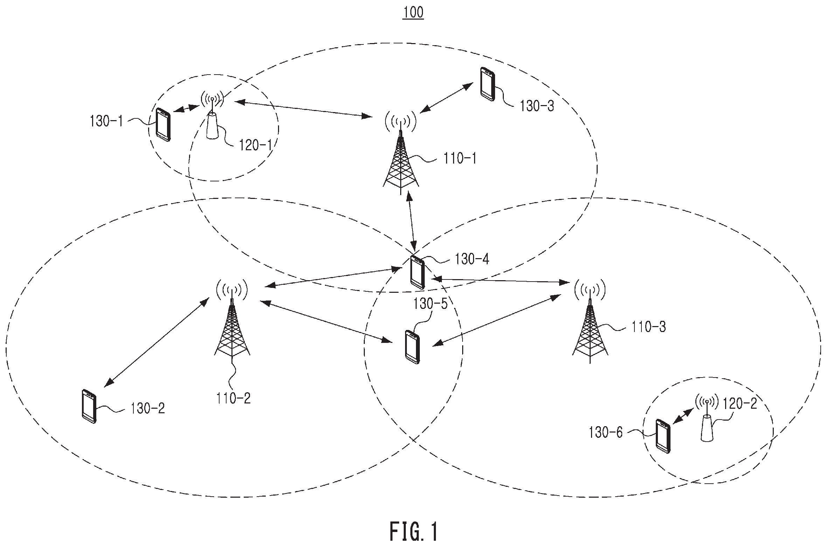

FIG. 1 is a conceptual diagram illustrating exemplary embodiments of a communication system.

Referring to FIG. 1, a communication system 100 may comprise a plurality of communication nodes 110-1, 110-2, 110-3, 120-1, 120-2, 130-1, 130-2, 130-3, 130-4, 130-5, and 130-6. The plurality of communication nodes may support 4G communication (e.g., long term evolution (LTE), LTE-advanced (LTE-A)), 5G communication (e.g., new radio (NR)), 6G communication, etc. specified in the 3rd generation partnership project (3GPP) standards. The 4G communication may be performed in frequency bands below 6GHz, and the 5G and 6G communication may be performed in frequency bands above 6GHz as well as frequency bands below 6GHz.

For example, in order to perform the 4G communication, 5G communication, and 6G communication, the plurality of communication may support a code division multiple access (CDMA) based communication protocol, wideband CDMA (WCDMA) based communication protocol, time division multiple access (TDMA) based communication protocol, frequency division multiple access (FDMA) based communication protocol, orthogonal frequency division multiplexing (OFDM) based communication protocol, filtered OFDM based communication protocol, cyclic prefix OFDM (CP-OFDM) based communication protocol, discrete Fourier transform spread OFDM (DFT-s-OFDM) based communication protocol, orthogonal frequency division multiple access (OFDMA) based communication protocol, single carrier FDMA (SC-FDMA) based communication protocol, non-orthogonal multiple access (NOMA) based communication protocol, generalized frequency division multiplexing (GFDM) based communication protocol, filter bank multi-carrier (FBMC) based communication protocol, universal filtered multi-carrier (UFMC) based communication protocol, space division multiple access (SDMA) based communication protocol, orthogonal time-frequency space (OTFS) based communication protocol, or the like.

Further, the communication system 100 may further include a core network. When the communication 100 supports 4G communication, the core network may include a serving gateway (S-GW), packet data network (PDN) gateway (P-GW), mobility management entity (MME), and the like. When the communication system 100 supports 5G communication or 6G communication, the core network may include a user plane function (UPF), session management function (SMF), access and mobility management function (AMF), and the like.

Meanwhile, each of the plurality of communication nodes 110-1, 110-2, 110-3, 120-1, 120-2, 130-1, 130-2, 130-3, 130-4, 130-5, and 130-6 constituting the communication system 100 may have the following structure.

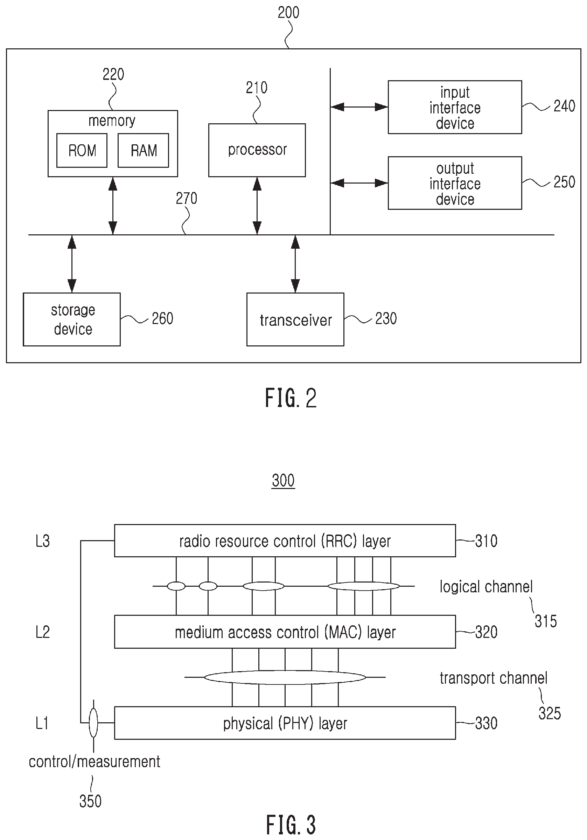

FIG. 2 is a block diagram illustrating exemplary embodiments of a communication node constituting a communication system.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

However, each component included in the communication node 200 may not be connected to the common bus 270 but may be connected to the processor 210 via an individual interface or a separate bus. For example, the processor 210 may be connected to at least one of the memory 220, the transceiver 230, the input interface device 240, the output interface device 250 and the storage device 260 via a dedicated interface.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B (NB), evolved Node-B (eNB), gNB, base transceiver station (BTS), radio base station, radio transceiver, access point, access node, or the like. Each of the plurality of terminals 130-1, 130-2, 130-3, 130-4, 130-5, and 130-6 may refer to a user equipment (UE), terminal, access terminal, mobile terminal, station, subscriber station, mobile station, portable subscriber station, node, device, or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

FIG. 3 is a conceptual diagram illustrating exemplary embodiments of a radio interface protocol structure in a communication system.

Referring to FIG. 3, an exemplary embodiment of a radio interface protocol structure 300 of a communication system may be configured to include a radio resource control (RRC) layer 310, a medium access control (MAC) layer 320, a physical (PHY) layer 330, and the like. An exemplary embodiment of the radio interface protocol structure 300 shown in FIG. 3 may correspond to various exemplary embodiments of interfaces such as an interface between a terminal and a base station, an interface between an IAB-node distributed unit (IAB-DU) and an IAB-node mobile terminal (IAB-MT) of an integrated access backhaul (IAB) network, an interface between an IAB-DU and a lower node, an interface between an IAB-MT and an upper node, an interface between a plurality of terminals, and the like.

In the vicinity of the PHY layer 330, the RRC layer 310, and the MAC layer 320, and the like may be disposed above the PHY layer 330. For example, the MAC layer 320 may be disposed above the PHY layer 330. The RRC layer 310 may be disposed above the MAC layer 320.

The MAC layer 320 may be connected to a higher layer (e.g., RRC layer 310) through logical channels 315. The PHY layer 330 may be connected to the higher MAC layer 320 through transport channels 325. The PHY layer 330 may transmit and receive control information or measurement information 350 to and from the RRC layer 310.

The PHY layer 330 may be referred to as a 'layer 1' or 'L1'. The MAC layer 320 may be referred to as a 'layer 2' or 'L2'. The RRC layer 310 may be referred to as a 'layer 3' or 'L3'. The RRC layer 310 and the MAC layer 320 may be collectively referred to as the 'higher layer'.

In the present disclosure, 'L1 signaling' refers to signaling such as downlink control information (DCI) transmitted on a physical downlink control channel (PDCCH), uplink control information (UCI) transmitted on a physical uplink control channel (PUCCH), and sidelink control information (SCI) transmitted on a physical sidelink control channel (PSCCH), which are channels of the PHY layer 330. Similarly, in the present disclosure, 'higher layer signaling' may include L2 signaling transmitted through a MAC control element (CE), L3 signaling transmitted through RRC signaling, and the like.

In a communication system to which the 5G communication technology, etc. is applied, one or more of numerologies of Table 1 may be used in accordance with various purposes, such as inter-carrier interference (ICI) reduction according to frequency band characteristics, latency reduction according to service characteristics, and the like.

[Table 1]

| $\mu$ | $\Delta f = 2^{\mu} \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Table 1 is merely an example for the convenience of description, and exemplary embodiments of the numerologies used in the communication system may not be limited thereto. Each numerology $\mu$ may correspond to information of a subcarrier spacing (SCS) $\Delta f$ and a cyclic prefix (CP). The terminal may identify a numerology $\mu$ and a CP value applied to a downlink bandwidth part (BWP) or an uplink BWP based on higher layer parameters such as subcarrierSpacing, cyclicPrefix, and/or the like.

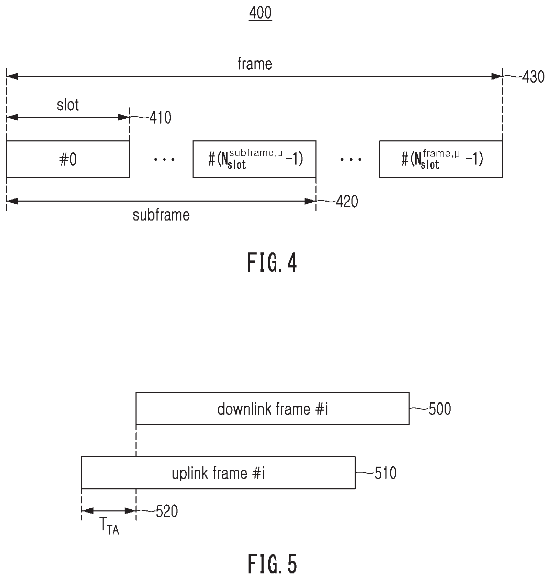

FIG. 4 is a conceptual diagram illustrating an exemplary embodiment of time resources in which radio signals are transmitted in a communication system.

Referring to FIG. 4, time resources in which radio signals are transmitted in a communication system 400 may be represented with a frame 430 comprising one or more ( $N_{\text{slot}}^{\text{frame},\mu} / N_{\text{slot}}^{\text{subframe},\mu}$ ) subframes, a subframe 420 comprising one or more ( $N_{\text{slot}}^{\text{subframe},\mu}$ ) slots, and a slot 410 comprising 14 ( $N_{\text{symb}}^{\text{slot}}$ ) OFDM symbols. In this case, according to a configured numerology, as the values of $N_{\text{symb}}^{\text{slot}}$, $N_{\text{slot}}^{\text{subframe},\mu}$, and $N_{\text{slot}}^{\text{frame},\mu}$, values according to Table 2 below may be used in case of a normal CP, and values according to Table 3 below may be used in case of an extended CP. The OFDM symbols included within one slot may be classified into 'downlink', 'flexible', or 'uplink' by higher layer signaling or a combination of higher layer signaling and L1 signaling.

[Table 2]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 3]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

In the NR communication system (e.g., 5G communication system), the frame 430 may have a length of 10 ms, and the subframe 420 may have a length of 1 ms. Each frame 430 may be divided into two half-frames having the same length, and the first half-frame (i.e., half-frame 0) may be composed of subframes #0 to #4, and the second half-frame (i.e., half-frame 1) may be composed of subframes #5 to #9. One carrier may include a set of frames for uplink (i.e., uplink frames) and a set of frames for downlink (i.e., downlink frames).

FIG. 5 is a conceptual diagram illustrating a time difference between a reception timing of an i-th downlink frame and a transmission timing of an i-th uplink frame in an exemplary embodiment of a communication system.

Referring to FIG. 5, a time difference between a reception timing of an i-th downlink frame 500 and a transmission timing of an i-th uplink frame 510 may be a $T_{TA}$ 520. Accordingly, the terminal may start transmission of the uplink frame #i 510 at a time earlier by $T_{TA}$ compared to the reception timing of the downlink frame #i 500. $T_{TA}$ may be referred to as a timing advance or timing adjustment TA. The base station may instruct the terminal to change a value of $T_{TA}$ through higher layer signaling or L1 signaling. For example, $T_{TA}$ may be configured in the base station and/or terminal to be applied in a manner defined as $T_{TA} = (N_{TA} + N_{TA,offset})T_c$. In the case of NR communication system, $T_c$ may be defined as $T_c = \dfrac{1}{(\Delta f_{max} \cdot N_f)}$, $\Delta f_{max}$ may be defined as $\Delta f_{max} = 480\ kHz$, $N_f$ may be defined as $N_f = 4096$, $N_{TA,offset}$ may be a value set by L3 signaling, and $N_{TA}$ may be a value determined by Equation 1 below by a value $T_A$ indicated by L2 signaling.

[Equation 1]

$$N_{TA} = \begin{cases} T_A \cdot 16 \cdot \dfrac{64}{2^\mu} & \text{(for random access response)} \\ N_{TA\_old} + \left( (T_A - 31) \cdot 16 \cdot 64/2^\mu \right) & \text{(for other cases)} \end{cases}$$

Here, the description on $N_{TA,offset}$ and $N_{TA}$ may be an example for a specific situation, and various other options may exist, but in order not to obscure the gist of the description, all possible cases may not be listed in the present disclosure.

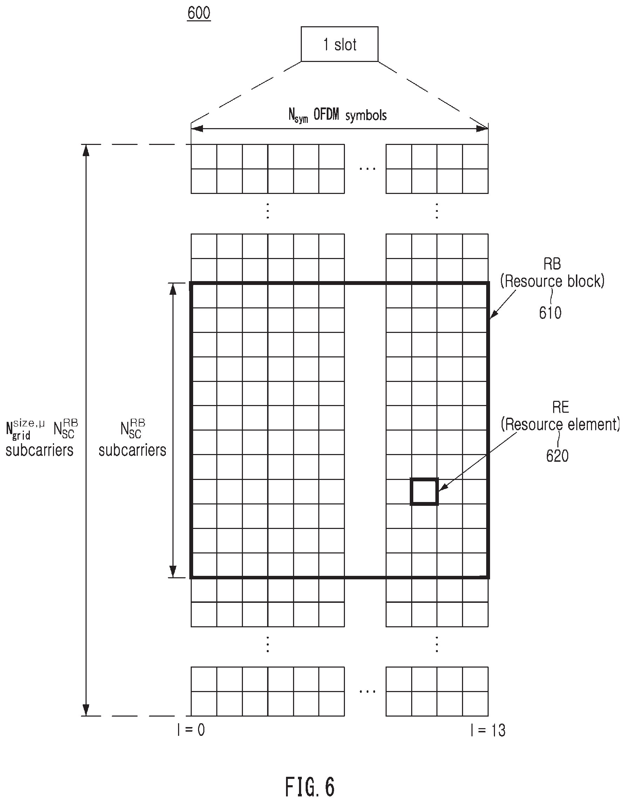

FIG. 6 is a conceptual diagram illustrating exemplary embodiments of a time/frequency resource grid of a communication system.

Referring to FIG. 6, a time/frequency resource grid 600 of a communication system may have $N_{grid}^{size,\mu} N_{sc}^{RB}$ subcarriers and $N_{slot}^{subframe,\mu}$ OFDMs. The resource grid may be defined for each numerology and each carrier. In this case, $N_{grid}^{start,\mu}$ may mean a position of a common resource block (CRB) indicated by higher layer signaling. $N_{grid}^{size,\mu}$ may mean the number of resource blocks (RBs) starting from the CRB. That is, $N_{grid}^{size,\mu}$ may mean a carrier bandwidth.

$N_{grid}^{start,\mu}$ and/or $N_{grid}^{size,\mu}$ may have different values for each link direction (e.g., uplink, downlink, or sidelink) or for each numerology $\mu$. Here, the numerology $\mu$ may be referred to by other terms, such as a SCS configuration, if necessary.

Each element in the resource grid for an antenna port p and a SCS configuration $\mu$ may be referred to as a resource element (RE) 620. The RE 620 may be uniquely defined for each position $(k, l)_{p,\mu}$. In this case, $k$ may be a frequency axis index, and $l$ may indicate a symbol position on the time axis. $RE(k, l)_{p,\mu}$ may correspond to a physical resource used to transmit a physical channel or a signal complex value $a_{k,l}^{(p,\mu)}$. One RB 610 may be defined as consecutive $N_{sc}^{RB} = 12$ subcarriers on the frequency axis.

The 5G communication system can use a wider carrier bandwidth as compared with the 3G/4G communication system. The concept of bandwidth part (BWP) may be introduced in order to reduce high implementation complexity and power consumption of terminals due to the widened carrier bandwidth. One BWP may be composed of contiguous CRBs, a starting RB position $N_{BWP,i}^{start,\mu}$ of the BWP and the number $N_{BWP,i}^{size,\mu}$ of RBs constituting the BWP may satisfy Equations 2 and 3.

[Equation 2]

$$N_{\mathrm{grid},x}^{\mathrm{start},\mu} \leq N_{\mathrm{BWP},i}^{\mathrm{start},\mu} < N_{\mathrm{grid},x}^{\mathrm{start},\mu} + N_{\mathrm{grid},x}^{\mathrm{size},\mu}$$

[Equation 3]

$$N_{\mathrm{grid},x}^{\mathrm{start},\mu} < N_{\mathrm{BWP},i}^{\mathrm{start},\mu} + N_{\mathrm{BWP},i}^{\mathrm{size},\mu} \leq N_{\mathrm{grid},x}^{\mathrm{start},\mu} + N_{\mathrm{grid},x}^{\mathrm{size},\mu}$$

Up to four downlink BWPs within one component carrier (CC) may be configured for a terminal. Only one downlink BWP among the downlink BWPs configured for the terminal may be activated at a time. The terminal may not receive a physical downlink shared channel (PDSCH), a physical downlink control channel (PDCCH), a channel state information reference signal (CSI-RS), or the like outside the activated BWP.

Up to four uplink BWPs within one CC may be configured for a terminal. Only one uplink BWP among the uplink BWPs configured for the terminal may be activated at a time. The terminal may not transmit a physical uplink shared channel (PUSCH), a physical uplink control channel (PUCCH), a sounding reference signal (SRS), or the like outside the activated BWP.

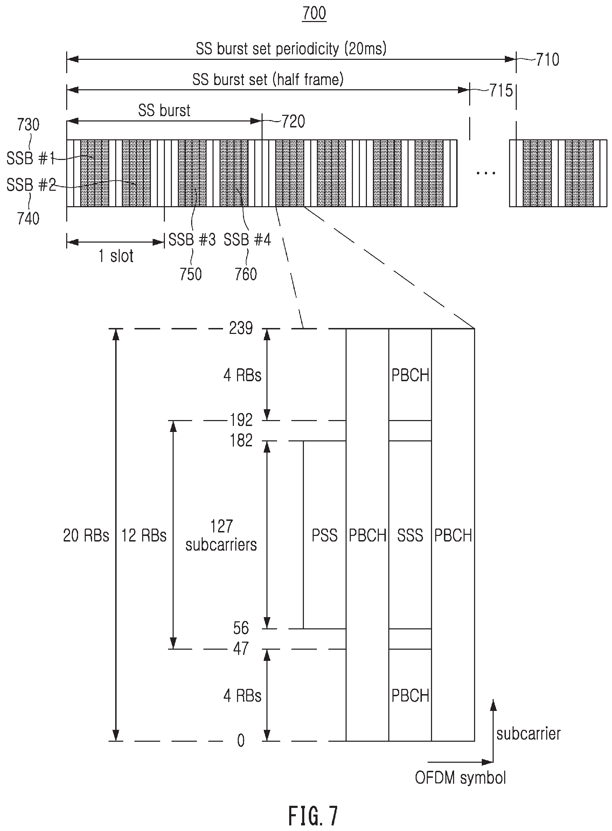

FIG. 7 is a conceptual diagram illustrating exemplary embodiments of a synchronization signal and physical broadcast channel (SS/PBCH) block or synchronization signal block (SSB) of a communication system.

Referring to FIG. 7, an SS/PBCH block 700 of a communication system may be configured with a primary synchronization signal (PSS) transmitted in 127 subcarriers in the middle of a first OFDM symbol, a secondary synchronization signal (SSS) transmitted in 127 subcarriers in the middle of a third OFDM symbol, and a physical broadcast channel (PBCH) transmitted in second, third, and fourth OFDM symbols. The PBCH occupying the widest bandwidth may be transmitted over 20 RBs, which may be 3.6 MHz based on 15 kHz SCS. The base station may transmit one SSB by applying the same beam. When the number of base station antennas increases or it is necessary to operate multiple beams such as applying one or more analog beams for high frequency support, the base station may support multi-beam operations by transmitting multiple SSBs. The term 'beam' may be expressed in various terms such as a transmission precoding or a spatial transmission filter. However, in order not to obscure the gist of the description, 'beam' is used hereinafter as a unified term.

The base station may transmit a plurality of SSBs 730, 740, 750, and 760 to represent a plurality of beams (e.g., beam #1, beam #2, beam #3, beam #4). In this case, it may be possible that one or more SSBs are transmitted within one slot according to a pattern predetermined according to each numerology. The SSBs 730, 740, 750, and 760 to which different beams are applied may be included in an SS burst 720. In other words, the SSBs 730, 740, 750, and 760 to which different beams are applied may be configured as one group. The terminal may assume a half-frame window having a length of 5 ms at the time of monitoring SSBs. An SS burst set 715 configured by higher layer signaling within the half-frame window may include one or more SS bursts 720. The terminal may not know RRC configuration value(s) or may not be able to use RRC configuration value(s) in an initial access (IA) procedure. In this case, the terminal may receive or measure the SSBs assuming that a periodicity of the SS burst set 710 is 20 ms.

In the present disclosure, a downlink network structure and an uplink network structure may be independently configured in consideration of a non-terrestrial network (NTN) environment. For example, the downlink network structure and the uplink network structure may be configured differently. Considering the NTN environment, the network structure may be configured independently for each component carrier (CC), carrier group (CG), and/or cell. For example, the network structure may be configured differently for each CC, CG, and/or cell. To compensate for an uplink propagation loss considering the NTN environment, a transmission gain of a relay (or repeater) may be controlled. When the terminal performs dual-connectivity (DC) operations for terrestrial network (TN)-NTN or NTN-NTN, uplink communication (e.g., uplink transmission) may be controlled based on power reduction and/or external power source(s).

When the terminal performs DC operations for TN-NTN or NTN-NTN, power alignment for downlink communication (e.g., downlink receptions) may be requested in order to reduce a dynamic range. In the present disclosure, uplink transmission may refer to uplink communication, and downlink reception may refer to downlink communication. The dynamic range may refer to a power dynamic range. The power dynamic range may refer to a difference between minimum power and maximum power for a specific resource or a difference between a power (e.g., actual power) and an average power for a specific resource. The specific resource may be a resource element (RE), symbol, resource block (RB), subband, carrier, etc. Alternatively, the power dynamic range may refer to a difference between a power (e.g., reception power, transmission power, average power, minimum power, maximum power) for a first network and a power (e.g., reception power, transmission power, average power, minimum power, maximum power) for a second network.

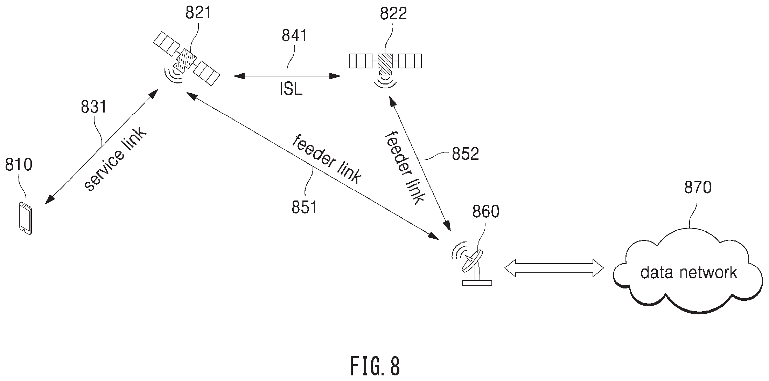

FIG. 8 is a conceptual diagram illustrating common delays in an NTN environment.

Referring to FIG. 8, at least three types of wireless links may exist in the NTN environment (e.g., NTN scenario). The at least three types of wireless links may include a service link 831, an inter-satellite link (ISL) 841, and feeder links 851 and 852. The service link 831 may be a link between a terminal 810 and a satellite 821. The ISL 841 may be a link between the satellites 821 and 822. The feeder links 851 and 852 may be links between a TN 860 connected to a data network 870 and the satellites 821 and 822. The TN 860 may correspond to a gateway on the ground.

The terminal may calculate (e.g., determine) a timing advance (TA) of the terminal based on location information obtained from a global navigation satellite system (GNSS) and/or ephemeris information of a serving satellite. The TA may be determined based on Equation 4 below. The ephemeris information may be obtained from the serving satellite (e.g., serving base station).

[Equation 4]

$$T_{TA} = (N_{TA} + N_{TA,UE-specific} + N_{TA,common} + N_{TA,offset}) \times T_C$$

$N_{TA}$ may be defined as 0 for a PRACH. $N_{TA}$ may be updated based on a TA command field of msg2, msgB, and/or MAC CE. $N_{TA,UE-specific}$ may be used to compensate in advance for a delay on the service link. $N_{TA,UE-specific}$ may be a TA estimated by the terminal itself. $N_{TA,common}$ may be a network-controlled common TA. $N_{TA,common}$ may include a timing offset regarded necessary by the network (e.g., communications network). $N_{TA,common}$ may support a value of 0. $N_{TA,offset}$ may be a fixed offset used to calculate the TA. The terminal may not assume that a round trip time (RTT) between the terminal and the base station is the same as a TA calculated for msg1/msgA.

A validity period of the ephemeris information (e.g., satellite ephemeris data) may indicate the maximum time during which the terminal can apply the satellite ephemeris (e.g., existing satellite ephemeris) without acquiring new ephemeris information. The validity period of the ephemeris information may be set by the network. An update procedure of $N_{TA}$ may be performed based on a TA command of msg2/msgB and/or a TA command of MAC CE. The update procedure of $N_{TA}$ may be used for alignment (e.g., adjustment, modification, control) of an uplink timing. If a msg2/msgB including a TA command (e.g., TA) is received, the terminal may perform a first adjustment (e.g., alignment, modification, control) procedure. $N_{TA}$ may be updated as shown in Equation 5 below.

[Equation 5]

$$N_{TA} = N_{TA,old} + T_A \cdot 16 \cdot \frac{64}{2^\mu}$$

In Equation 5, $T_A$ may be indicated by a TA command field included in the msg2/msgB. When a MAC CE including a TA command is received, $N_{TA}$ may be updated as shown in Equation 6 below.

[Equation 6]

$$N_{TA\_new} = N_{TA,old} + (T_A - 31) \cdot 16 \cdot \frac{64}{2^\mu}$$

In Equation 6, $T_A$ may be indicated by a TA command field included in the MAC CE. The common TA (e.g., common TA) may include a parameter indicating a timing drift. The terminal may apply the common TA based on the parameter(s) provided by the network. When requirement(s) of an uplink timing error are defined, an offset between the common TA according to the parameter(s) provided by the network and an RTT of the actual feeder link may not be considered.

To improve the timing relationship, a scheduling offset $K_{offset}$ may be introduced. The scheduling offset $K_{offset}$ may be set by system information, and the scheduling offset $K_{offset}$ may be used in an initial access procedure. In this case, a cell-specific $K_{offset}$ used for all beams of at least one cell may be supported. In addition to $K_{offset}$, a scheduling offset for MAC CE may be defined as $K_{mac}$.

A downlink frame timing and an uplink frame timing may be aligned at the base station. In this case, $K_{mac}$ may not be needed for operations and/or assumptions of the terminal with respect to downlink and uplink configurations indicated by a MAC CE command transmitted on a PDSCH. On the other hand, a downlink frame timing and an uplink frame timing may not be aligned at the base station. In this case, $K_{mac}$ may be needed for operations and/or assumptions of the terminal with respect to a downlink configuration indicated by a MAC CE command transmitted on a PDSCH, and $K_{mac}$ may not be needed for operations and/or assumptions of the terminal with respect to an uplink configuration indicated by the MAC CE command transmitted on the PDSCH. Information on $K_{mac}$ may be included in system information. In other words, the base station may transmit system information including $K_{mac}$ to the terminal. The terminal may receive the system information from the base station and identify $K_{mac}$ included in the system information.

Update of $K_{offset}$ may be supported after the initial access procedure. By introducing $K_{offset}$ for TA command reception, adjustment (e.g., alignment, modification, control) of an uplink transmission timing may be supplemented. For update of $K_{offset}$ after the initial access procedure, the network (e.g., base station) may provide and/or update a UE-specific $K_{offset}$ using a MAC CE. For the cell-specific $K_{offset}$ set by system information, one of the following two options (e.g., Options 1 and 2) may be selected. Option 1 may be a scheme of signaling one offset value. For example, a value signaled according to Option 1 may include an RTT of the service link and an RTT between the service satellite (e.g., serving satellite) and a reference point. In the present disclosure, the signaling may be at least one of system information (SI) signaling, RRC signaling, MAC CE signaling, or PHY signaling.

Option 2 may be a scheme of signaling two offset values. The two offset values may include a first offset value and a second offset value. $K_{offset}$ may be a sum of the two offset values. The first offset value may be the RTT between the serving satellite and the reference point (or a value determined based on the common TA). The second offset value may be the RTT of the service link. If no $K_{offset}$ other than the value indicated by system information (e.g., $K_{offset}$) is provided to the terminal, the terminal may apply the value (e.g., $K_{offset}$) indicated by the system information to improve all timing relationships. The network (e.g., base station) may provide the terminal with $K_{mac}$ for MAC CE, which is a scheduling offset other than $K_{offset}$. If the network does not provide $K_{mac}$ to the terminal, the terminal may assume $K_{mac}=0$.

An estimate of a terminal-base station RTT may be equal to a sum of the terminal's TA and $K_{mac}$. The terminal-base station RTT may refer to an RTT on a link between the terminal and the base station. The 'terminal-base station RTT' may refer to the RTT between the terminal and the base station. The TA of the terminal may be determined based on $T_{TA}$. An estimate of a base station-satellite RTT may be equal to a sum of $N_{TA,common} \times T_C$ and $K_{mac}$. The base station-satellite RTT may refer to an RTT in the link between the base station and the satellite. If the network does not provide $K_{mac}$ to the terminal, the terminal may assume $K_{mac}=0$.

An NTN ephemeris (e.g., ephemeris information) may be divided into ephemeris of the serving cell and ephemeris of neighboring cell(s). Information on when a cell stops local services and/or timing information (e.g., timer and/or absolute time) for a new cell may be supported, at least in an Earth-fixed NTN scenario. Whether both types of ephemeris information (e.g., ephemeris information of the serving cell and ephemeris information of neighboring cell(s)) are required may be identified based on system information and/or ephemeris information.

At least for uplink scheduling adaptation, the terminal may report information on UE-specific TA pre-compensation. While an RA procedure is performed, the terminal may report UE-specific TA pre-compensation to the base station using a MAC CE. If the reporting operation is activated by the network, the terminal may report information on the UE-specific TA pre-compensation to the base station (e.g., network) in the RA procedure using a MAC CE (e.g., transmission procedure of msgA, transmission procedure of msg3, and/or transmission procedure of msg5). The information on the UE-specific TA pre-compensation reported in the RA procedure using the MAC CE may be a UE-specific TA. The reporting of the UE-specific TA (e.g., reporting of UE-specific TA pre-compensation) in the RA procedure may be activated/deactivated by system information (SI). The reporting of the UE-specific TA (e.g., reporting information on the UE-specific TA) may be supported in the connected mode (e.g., RRC connected mode). An event trigger scheme may be supported to report information on the UE-specific TA in the connected mode. If a triggering event is configured, the terminal may report information on the UE-specific TA pre-compensation to a target cell in the RA procedure.

If the terminal is not able to report UE location information in the connected mode, the content of the UE-specific TA reported to the base station in the connected mode may be information on the UE-specific TA pre-compensation. If the content of the information on the UE-specific TA reported to the base station is UE location information of the terminal in the connected mode, an RRC signaling may be used to report the UE location information of the terminal (e.g., information on the UE-specific TA). If the terminal is able to report UE location information of the terminal to the base station in the connected mode, for a purpose of TA reporting in the connected mode (e.g., reporting information on the UE-specific TA, reporting UE location information), the network (e.g., base station) may configure the terminal to report the UE-specific TA pre-compensation and/or the UE location information. If the content of the information on the UE-specific TA to be reported in the connected mode to the network is a value of the TA pre-compensation (e.g., UE-specific TA pre-compensation), the terminal may use a MAC CE to report information on the UE-specific TA.

The reporting of the UE location may be performed based on an event-triggering scheme. The reporting of the UE location based on the event-triggering scheme may be configured by the base station to obtain information of updates of the UE location of the terminal in the connected mode (e.g., RRC connected mode). In other words, the base station may transmit configuration information for event-based UE location reporting to the terminal. Periodic UE location reporting may be configured by the base station to obtain information of UE location updates of the terminal in the connected mode (e.g., RRC connected mode).

In order to configure the terminal to report information on the UE-specific TA in a handover procedure, a new indication in RRC reconfiguration with synchronization may not be necessary. The SI (e.g., SIB) may indicate whether information indicating activation or deactivation of the TA reporting (e.g., reporting of information on the UE-specific TA) in the target cell is transmitted through a handover command.

The information on the UE-specific TA pre-compensation may not be reported in an RA procedure triggered according to a request for other SI. The event trigger for reporting information on the UE-specific TA (e.g., UE-specific TA pre-compensation) may be based on the TA value. A TA offset threshold may be used in the event-triggered reporting procedure. At least the TA offset threshold may be a value between a current UE-specific TA value and the last successfully reported UE-specific TA value.

In the quasi-Earth fixed scenario or Earth fixed scenario, timing information on when the cell stops serving the corresponding area may be needed to support cell reselection operations (e.g., NTN cell reselection operations). The base station (e.g., cell, network) may transmit, to the terminal, system information including timing information on when the cell stops services to the corresponding area. The system information may be broadcast. A time at which the cell stops services to the corresponding area may refer to 'cell stop time'. The operation of broadcasting of information on the cell stop time using an SIB may be applied to quasi-Earth fixed cells. In other words, the operation of broadcasting information on the cell stop time using an SIB may not apply to moving cells. In the quasi-Earth fixed scenario, the timing information on when the cell stops services (e.g., cell stop time) may be used to determine when to perform measurements on neighboring cells. In the quasi-Earth fixed scenario (e.g., quasi-Earth fixed cells), the system information including information on a reference location of the cell (e.g., serving cell and/or neighboring cell) may be broadcast. The reference location may be a center of the cell.

In the quasi-Earth fixed scenario, the terminal may start measuring neighboring cells before the serving cell stops serving the current area. In the quasi-earth fixed scenario, the broadcasted information on the cell stop time (e.g., timing information) may indicate a time when the cell does not cover the current area. 'The cell does not cover the current area' may mean that the cell does not provide services for the current area. In the quasi-earth fixed scenario, the terminal may be configured to perform measurements on neighboring cells (e.g., adjacent cells) before the broadcasted stop time of the serving cell (e.g., cell stop time, the time when the cell stops covering the current area). An exact time at which the terminal performs the measurement operation on neighboring cells may be determined depending on an implementation of the terminal.

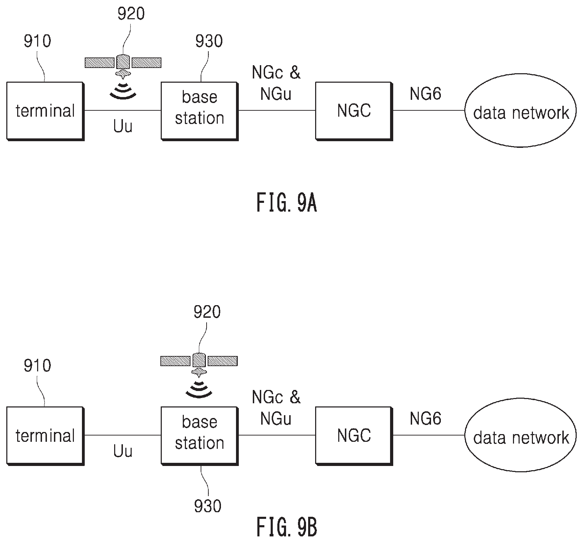

FIGS. 9A to 9D are conceptual diagrams illustrating various forms of a 3D space communication system.

Referring to FIGS. 9A to 9D, a 3D space communication system (e.g., space communication network) may be designed so that a terminal performs wireless communication using a device (e.g., communication node) located in the sky. In the present disclosure, satellites (e.g., 3D space devices) may mean High-Altitude Pseudo Satellites (HPAS), High Altitude Platform Stations (HPAS), Unmanned Aerial Vehicles (UAVs), Urban Air Mobility (UAM), etc. The satellites (e.g., three-dimensional space devices) may not be limited to HPAS, UAVs, and/or UAMs. The satellite may refer to a three-dimensional space device.

In the exemplary embodiment of FIG. 9A, a satellite 920 may relay communication between a terminal 910 and a base station 930. The terminal 910 may be an NTN node (e.g., NTN terminal). The satellite 920 may be a remote radio head (RRH). The satellite 920 may perform a function of relaying Uu radio interface signals between the terminal 910 and the base station 930. An NTN gateway may be included in the base station 930 or the base station 930 itself. In the exemplary embodiment of FIG. 9A, the satellite 920 may relay signals between the terminal 910 and the base station 930, and the satellite 920 may operate transparently. In other words, the satellite 920 may be a transparent-type satellite (i.e., bent-pipe satellite).

In the exemplary embodiment of FIG. 9B, the satellite 920 may support some or all of functions of the base station 930. The satellite 920 may perform functions of a base station or relay node. The satellite 920 may be a satellite base station, and the satellite 920 may directly form (e.g., establish) a Uu link (e.g., Uu radio interface) with terminal 910, and the satellite 920 may be a regenerative-type satellite. In other words, the satellite 920 may support regeneration operations for signals.

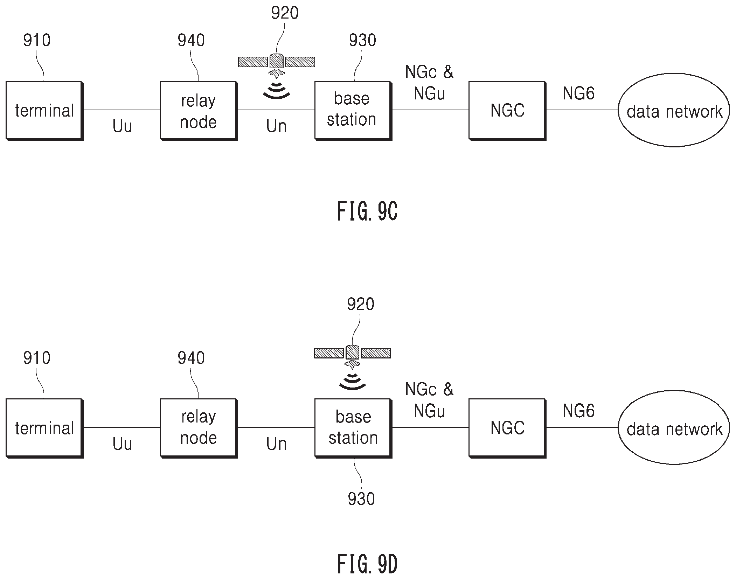

In the exemplary embodiment of FIG. 9C, the terminal 910 may form (e.g., establish) a Uu link with a relay node 940. The relay node 940 may be located around the terminal, outdoors, indoors, or on the ground. Alternatively, the relay node 940 may be located within the satellite 920. The relay node 940 may be connected to the base station 930 via the satellite 920. The satellite 920 may be an NTN node. The base station 930 may be a terrestrial base station. The terrestrial base station may refer to a base station located on the ground. The satellite 920 may relay communication between the relay node 940 and the base station 930. The satellite 920 may be an RRH. The satellite 920 may perform a function of relaying Un radio interface signals between the relay node 940 and the base station 930. An NTN gateway may be included in the base station 930 or the base station 930 itself.

In the exemplary embodiment of FIG. 9D, the terminal 910 may form (e.g., establish) a Uu link with the relay node 940. The relay node 940 may be located around the terminal, outdoors, indoors, or on the ground. The base station 930 may be an NTN node. The satellite 920 may support some or all of functions of the base station 930. An Un link may be established between the relay node 940 and the satellite 920 supporting the function(s) of the base station.

When the terminal performs communication in the NTN environment, downlink performance and/or uplink performance need to be guaranteed. In the NTN environment, the terminal communicates with a satellite located at a high altitude, so a latency in NTN communication may be greater than a latency in TN communication. A power required for data transmission and reception in NTN communication may be greater than a power required for data transmission and reception in TN communication. Therefore, it may not be easy to ensure performance that satisfies service requirement(s) in the NTN environment. The terminal may have lower power than the satellite. Therefore, there may be limitations in performing uplink transmission in a terminal with relatively low power. The downlink performance and uplink performance may be determined based on different criteria.

The terminal may communicate with the satellite on a relay basis using an external antenna and/or external power. In other words, the terminal may use external power (e.g., external power source) to perform uplink transmission to the satellite. The terminal may support multi-connectivity. For example, the terminal may support NTN-NTN DC and/or TN-NTN DC (e.g., NTN-TN DC). If NTN-NTN DC and/or TN-NTN DC are supported, communication performance can be guaranteed in the NTN environment. In other words, the terminal may communicate with the satellite(s) based on multi-connectivity, and in this case, communication performance can be guaranteed.

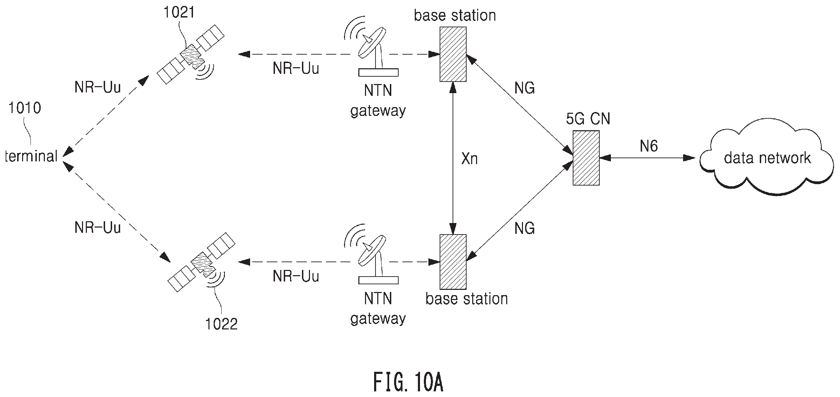

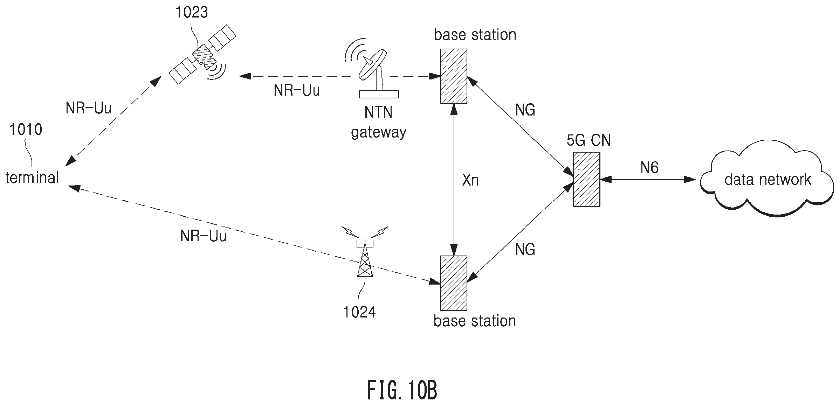

FIGS. 10A and 10B are conceptual diagrams illustrating exemplary embodiments of multi-connectivity in an NTN environment.

Referring to FIG. 10A, a terminal 1010 may support multi-connectivity functions. The terminal 1010 may perform NTN-NTN DC based on NTN-NTN aggregation. In other words, the terminal 1010 may be connected to two NTNs 1021 and 1022 and may perform communication (e.g., data communication) with the two NTNs 1021 and 1022. The two NTNs 1021 and 1022 may correspond to satellites (e.g., networks including satellites). When NTN-NTN DC is performed, communication performance can be improved.

Referring to FIG. 10B, the terminal 1010 may support multi-connectivity functions. The terminal 1010 may perform TN-NTN DC based on TN-NTN aggregation. In other words, the terminal 1010 may be connected to an NTN 1023 and a TN 1024 and perform data communication with the NTN 1023 and TN 1024. The NTN 1023 may correspond to a satellite (e.g., network including the satellite). The TN 1024 may refer to a base station (e.g., network including a terrestrial base station). When TN-NTN DC is performed, communication performance can be improved.

In the exemplary embodiment of FIG. 10A, a latency and/or network topology of the first NTN 1021 to which the terminal 1010 is connected and a latency and/or network topology of the second NTN 1022 to which the terminal 1010 is connected may be different. In the exemplary embodiment of FIG. 10B, a latency and/or network topology of the NTN 1023 to which the terminal 1010 is connected and a latency and/or network topology of the TN 1024 to which the terminal 1010 is connected may be different. Design considering the different latencies and/or different network topologies may be necessary.

When the altitudes and/or orbits of the NTNs are different, the NTNs may have different latencies. The latencies and/or network topologies may differ between TN and NTN. When the terminal performs communication based on TN-NTN DC, operations considering the above situation may be necessary. When the terminal performs communication through a plurality of NTNs or TN-NTN based on multi-connectivity, a power usage method for the communication (e.g., communication based on multi-connectivity) may be necessary. A power used to transmit signals (e.g., data) to an NTN located at a high altitude may be higher than a power used to transmit signals to an NTN located at a low altitude. A power used to transmit data to the NTN may be higher than the power used to transmit data to the TN. Operation considering the above situation may be necessary.

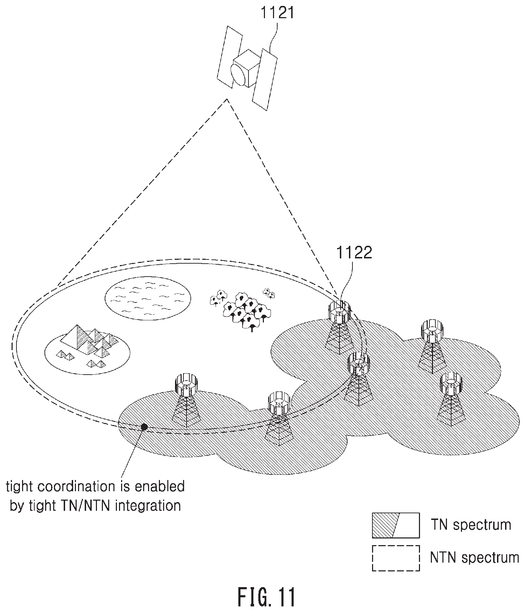

FIG. 11 is a conceptual diagram illustrating an environment in which TN and NTN coexist.

Referring to FIG. 11, a terminal may perform communication in an environment where a TN 1122 and an NTN 1121 coexist. Areas (e.g., desert, sea) covered by the NTN 1121 may exist. The TN 1122 and the NTN 1121 may coexist in an overlapping region between a coverage of the TN base station and a coverage of the NTN base station. Methods may be needed for a terminal located in the overlapping region to support communication with the NTN 1121 and/or the TN 1122. The terminal located in the overlapping region between the coverage (e.g., service area) of the NTN 1121 and the coverage (e.g., service area) of the TN 1122 may perform communication with at least one of the NTN 1121 or the TN 1122.

If the terminal supports multi-connectivity functions, the network (e.g., base station) may configure the terminal to perform connection operations and communication with a plurality of base stations. In other words, multi-connectivity operations may be configured in the terminal. The terminal may perform a connection operation with each of the TN base station and the NTN base station by performing TN-NTN DC operations to support TN-NTN aggregation, and may communicate with the TN base station and/or the NTN base station. The terminal may perform a connection operation with each of an NTN base station #1 and an NTN base station #2 by performing NTN-NTN DC operations to support NTN-NTN aggregation (e.g., aggregation of NTN #1 and NTN #2), and may communicate with the NTN base station #1 and/or NTN base station #2.

The terminal may support carrier aggregation (CA) functions. The terminal may perform communication using multiple CCs or CGs within one base station. A CG may include multiple carriers. The terminal may perform communication using multiple CCs or CGs within different base stations. The terminal may perform communication based on a combination of DC operation and CA operation. The combination of DC operation and CA operation may have various forms. Exemplary embodiments of the present disclosure may be applied to a TN-NTN DC environment, NTN-NTN DC environment, TN-NTN CA environment, NTN-NTN CA environment, TN-NTN DC&CA environment, and/or NTN-NTN DC&CA environment.

When the terminal performs multi-connectivity functions, compensation for a propagation loss may be necessary with respect to uplink transmission of each connection. The terminal may control (e.g., determine) an uplink transmission power by considering the TN and NTN. The terminal may control (e.g., determine) an uplink transmission power by considering the NTN #1 and NTN #2. With respect to downlink reception, the terminal may align downlink reception powers for signals simultaneously received from the TN and NTN. With respect to downlink reception, the terminal may align downlink reception powers for signals simultaneously received from the NTN #1 and NTN #2.

Exemplary embodiments of the present disclosure may be applied to an alignment operation, control operation, adjustment operation, reduction operation, etc. for downlink reception powers. The alignment operation of downlink reception powers may be an operation encompassing the control operation, adjustment operation, reduction operation, etc. for downlink reception powers. The power alignment operation may be performed so that the reception powers and/or transmission powers of various channels and/or signals all have the same value. Alternatively, the power alignment operation may be performed so that the reception powers and/or transmission powers of various channels and/or signals fall within a preset range (e.g., power dynamic range).

The downlink performance and uplink performance required in the NTN environment may be different. In the NTN environment, satellites may have higher transmission power than the terminal. Therefore, in the NTN environment, performance of the downlink through which the satellite transmits channels and/or signals to the terminal may be guaranteed. Since the transmission power of the terminal is limited, performance of the uplink through which the terminal transmits channels and/or signals to the satellite may not be guaranteed. In the present disclosure, 'signal' may be used as a term meaning a channel and/or signal. That is, 'signal' may be interpreted as a channel, signal, or 'channel and signal' depending on a context. In the NTN environment, downlink conditions and uplink conditions may be different. Considering the downlink conditions and/or uplink conditions, a downlink network structure and a uplink network structure may be independently configured (e.g., determined). For example, the downlink network structure may be different from the uplink network structure.

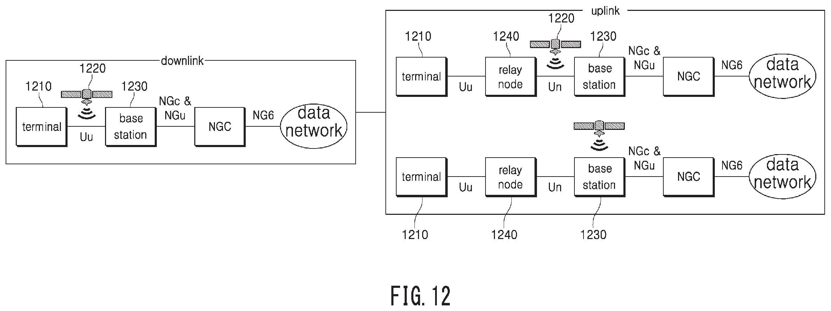

FIG. 12 is a conceptual diagram illustrating a downlink network structure and an uplink network structure in the NTN environment.

Referring to FIG. 12, a terminal 1210 may be connected to a base station 1230 via a satellite 1220, and may perform communication based on the connection. The satellite 1220 may be an RRH. The satellite 1220 may perform a function of relaying Uu radio interface signals. The terminal 1210 may receive channels and/or signals (e.g., data) from the base station 1230 via the satellite 1220 (e.g., Uu radio interface). The above-described network structure may be the same as the network structure shown in FIG. 9A.

The satellite 1220 may support some or all of functions of base station 1230. The satellite 1220 may form (e.g., establish) a Uu link directly with the terminal 1210. The above-described network structure may be the same as the network structure shown in FIG. 9B. The terminal 1210 may receive channels and/or signals (e.g., data) from the satellite 1220 supporting the function(s) of the base station 1230. Downlink communication may be performed in either the network structure shown in FIG. 9A or the network structure shown in FIG. 9B.

A transmission power of the terminal 1210 may be limited. In the uplink through which the terminal 1210 transmits channels and/or signals (e.g., data) to the network via the satellite 1220, if uplink communication is performed based on the above-described scheme (e.g., downlink communication scheme), performance of the uplink may not be guaranteed. Considering the above-described situation, the terminal 1210 may be connected to a relay node 1240 through a Uu link. The terminal 1210 may transmit channels and/or signals to the relay node 1240 through the Uu link. The satellite 1220 may be an RRH and may form (e.g., establish) a Un link with relay node 1240. The satellite 1220 may perform a function of relaying Un radio interface signals. Based on the connection, the channels and/or signals transmitted from the terminal 1210 to the relay node 1240 may be delivered to the base station 1230 via the satellite 1220. The above-described network structure may be the same as the network structure shown in FIG. 9C.

The terminal 1210 may be connected to the relay node 1240 through the Uu link. The terminal 1210 may transmit channels and/or signals to the relay node 1240 through the Uu link. The satellite 1220 may support some or all of the functions of the base station 1230. The satellite 1220 may form (e.g., establish) a Un link directly with relay node 1240. Based on the connection, channels and/or signals transmitted from the terminal 1210 to the relay node 1240 may be delivered to the NGC via the satellite 1220. The above-described network structure may be the same as the network structure shown in FIG. 9D.

Uplink communication may be performed in one of the network structures shown in FIGS. 9A to 9D. The uplink communication may be performed using an external power source (e.g., relay) that is capable of assisting the uplink transmission power. The uplink communication may be performed in various network structures including the external power sources.

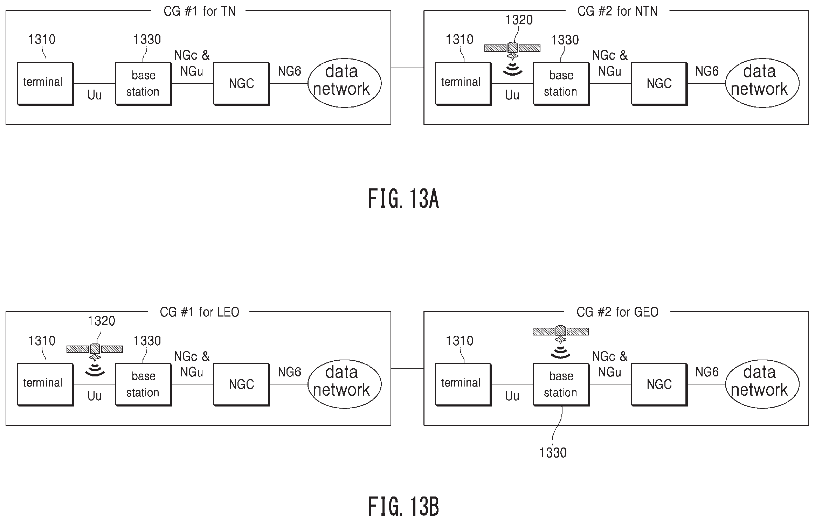

FIGS. 13A and 13B are conceptual diagrams illustrating a network structure for each CC, carrier group, and/or cell.

Referring to FIGS. 13A and 13B, a network structure may be independently configured for each CC, carrier group, and/or cell. For example, the network structure may be configured differently for each CC, carrier group, and/or cell. The terminal may perform TN-NTN DC or NTN-NTN DC operations based on multi-connectivity. The terminal may perform data communication based on multi-connectivity.

In the exemplary embodiment of FIG. 13A, a terminal 1310 may perform TN-NTN DC operations based on aggregation of TN and NTN. A network structure for a CG #1 for TN and a network structure for a CG #2 for NTN may be configured independently. For example, the network structure for the CG #1 for TN and the network structure for the CG #2 for NTN may be configured differently. In the network structure for the CG #1 for TN, a Uu link may be established between the terminal 1310 and a terrestrial base station 1330, and channels and/or signals may be transmitted and received through the Uu link. In the network structure for the CG #2 for NTN, the terminal 1310 may be connected to the base station 1330 via a satellite 1320, and channels and/or signals may be transmitted and received through the connection.

In the exemplary embodiment of FIG. 13B, the terminal 1310 may perform NTN-NTN DC operations based on aggregation of NTNs. For example, an LEO satellite may be used in one NTN environment, and a GEO satellite may be used in another NTN environment. The satellites used in the NTN environments may not be limited to LEO satellites and/or GEO satellites. A network structure for a CG #1 for LEO NTN and a network structure for a CG #2 for GEO NTN may be configured independently. For example, the network structure for the CG #1 for LEO NTN and the network structure for the CG #2 for GEO NTN may be configured differently.

In the network structure for the CG #1 for LEO NTN, the terminal 1310 may be connected to the base station 1330 via the satellite 1320, and channels and/or signals may be transmitted and received based on the connection. In the network structure for the CG #2 for GEO NTN, the satellite 1320 may support some or all of functions of the base station 1330, and the satellite 1320 may establish a Uu link directly with the terminal 1310. In the network structure for the CG #2 for GEO NTN, communication may be performed based on a satellite base station.

When the terminal performs multi-connectivity functions, independent network structures (e.g., different network structures) between TN and NTN or independent network structures (e.g., different network structures) between NTNs may be used. Available network structures may not be limited to the network structures described above. The exemplary embodiments of FIGS. 13A and/or 13B may be applied identically or similarly to CCs or cells instead of the CGs.

Independent networks (e.g., different networks) may be configured based on a combination of the examples of FIGS. 12, 13A, and/or 13B. Based on the multi-connectivity of the terminal, an independent network structure (e.g., different network structure) may be configured for each CC, CG, and/or cell at each base station, and an independent network structure (e.g., different network structure) for downlink and/or uplink may be configured for each CC, CG, and/or cell. Various network structures other than those shown in FIGS. 13A and/or 13B may be used.

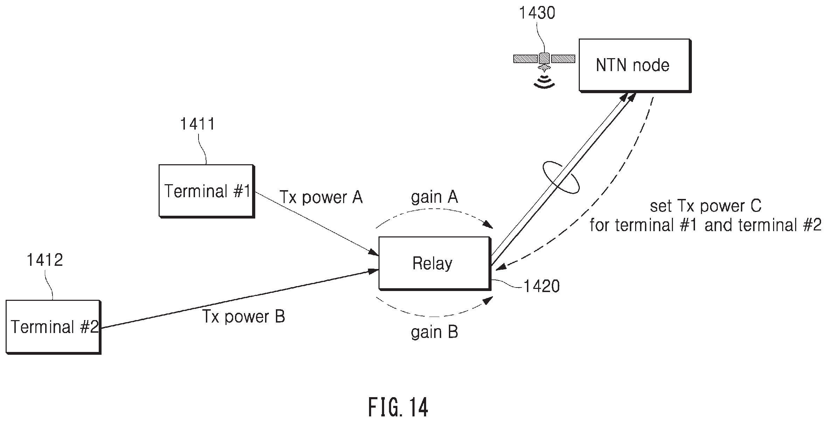

FIG. 14 is a conceptual diagram illustrating a compensation operation for an uplink propagation loss.

Referring to FIG. 14, a terminal #1 1411 and a terminal #2 1412 may transmit signals (e.g., uplink data) to a relay 1420. The relay 1420 may transmit the signals for the plurality of terminals 1411 and 1412 to an NTN node 1430. The relay 1420 may refer to a repeater. The NTN node 1430 may be a satellite. Alternatively, the terminal(s) 1411 and 1412 may transmit signals directly to the NTN node 1430. In other words, uplink transmission between the terminal(s) 1411 and 1412 and the NTN node 1430 may be performed without the relay 1420. As a difference in reception powers between signals received at the NTN node 1430 increases, a dynamic range required for signal reception at the NTN node 1430 may increase. Expensive equipment may be required to support the increased dynamic range.

Considering the above-described problem, the NTN node 1430 may align the reception powers so that the difference between reception powers of received signals is minimized. The NTN node 1430 may set an output power (e.g., transmission power) to control the reception powers, and transmit information on the output power to the relay 1420. The relay 1420 may receive information on the output power from the NTN node 1430, and transmit signal(s) of the terminal(s) 1411 and 1412 to the NTN node 1430 using the output power. For example, the base station (or NTN node, satellite) may set the output power of the relay 1420 (e.g., transmission power) considering a desired (e.g., required or preferred) reception power at the NTN node and/or satellite, and indicating the set output power to the relay 1420. The relay 1420 may transparently transmit the signal(s) received from the terminal(s) 1411 and 1412 to the NTN node 1430. In this case, the relay 1420 may transmit the signal(s) received from the terminal(s) 1411 and 1412 to the NTN node 1430 based on the output power indicated by the base station (or NTN node, satellite).

A transmission power (e.g., Tx power A) of the terminal #1 1411 transmitting an uplink signal (e.g., uplink data) to the relay 1420 and a transmission power (e.g., Tx power B) of the terminal #2 1412 transmitting an uplink signal (e.g., uplink data) to the relay 1420 may be different. The transmission power may be set differently based on a power class of each terminal, uplink pathloss compensation (ULPC) for each terminal, bandwidth for each terminal, and/or other reason(s). The relay 1420 may appropriately control an amplification and/or retransmission gain for the signal from the terminal #1 and/or an amplification and/or retransmission gain for the signal from the terminal #2 to achieve the indicated output power (e.g., set output power). In the same time resource(s) or a specific time period, the amplification and/or retransmission gain for each terminal may be set (e.g., determined) according to an explicit or implicit setting value of the base station. In the same time resource(s) or specific time period, the amplification and/or retransmission gain for each terminal may be set differently.

In order to provide the reception power desired by the NTN node 1430, the output power of the relay 1420 may be determined based on at least one of a time resource, frequency resource, or spatial resource. The relay 1420 may perform uplink transmission for a configured terminal group, and the output power of the relay 1420 may be set in consideration of the configured terminal group. Within the terminal group, a reception power for each terminal may be different. The NTN node 1430 may set the output power so that reception powers for signals of the terminals within the terminal group are similar, and may indicate the set output power to the relay 1420. The relay 1420 may adjust its gain based on the output power indicated by the NTN node 1430. In the exemplary embodiment of FIG. 14, the NTN node 1430 may transmit information on a transmission power (Tx) C for the terminal #1 1411 and the terminal #2 1412 to the relay 1420, and the relay 1420 may control its gain based on the Tx power C.

When the terminal is connected to TN and NTN based on multi-connectivity, or when the terminal is connected to NTNs based on multi-connectivity, methods for controlling uplink transmission power may be necessary.

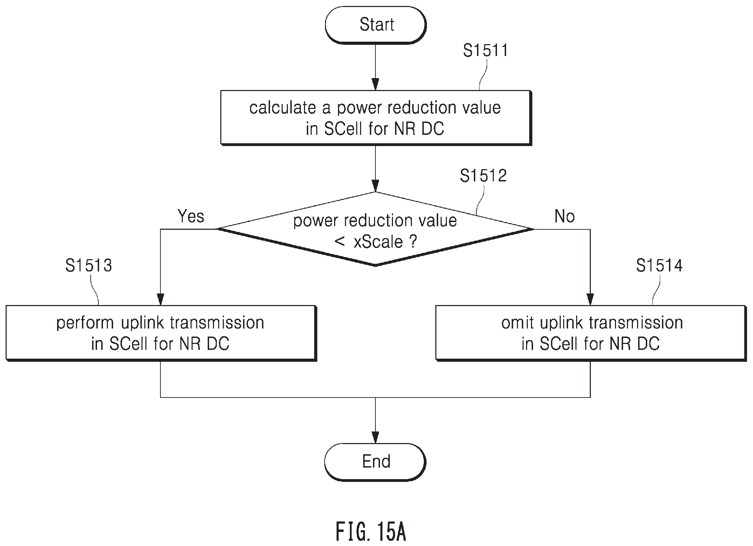

FIG. 15A is a flowchart illustrating a method for adjusting a transmission power of a terminal in a DC scenario.

Referring to FIG. 15A, a terminal may be connected to two base stations (e.g., two NR base stations) by performing NR DC operations and may perform communication with the two base stations. One of the two base stations may be a primary base station (e.g., main base station), and the other base station among the two base stations may be an auxiliary base station (e.g., secondary base station). Based on the NR DC operations, a primary cell (PCell) and a secondary cell (SCell) may be configured.

The terminal may calculate a power reduction value in the SCell for NR DC (S1511). For example, the power reduction value may mean a difference between a transmission power in uplink communication between the terminal and one base station and a transmission power in uplink communication between the terminal and two base stations. Alternatively, the power reduction value may mean a difference between a reference transmission power in uplink communication and a transmission power in uplink communication between the terminal and two base stations. The reference transmission power may be set in the terminal by signaling from the base station (e.g., network).

The terminal may compare the power reduction value with a threshold (e.g., xScale) (S1512). If the power reduction value is less than the threshold, the terminal may perform uplink transmission in the SCell for NR DC (S1513). In other words, if the power reduction value is less than the threshold, uplink communication may be performed in the PCell and SCell. If the power reduction value is equal to or greater than the threshold, the terminal may not perform uplink transmission in the SCell for NR DC (S1514). In other words, if the power reduction value for uplink transmission power for DC (or CA) is greater than the specific threshold, the terminal may not perform uplink transmission in the SCell for NR DC. Even if the power reduction value is equal to or greater than the threshold, uplink communication may not be stopped in the PCell.

The base station (e.g., TN base station, NTN base station, network) may set the threshold for power reduction, and threshold configuration information on the threshold to the terminal through signaling. The terminal may receive the threshold configuration information through signaling from the base station. The signaling may be at least one of system information (SI) signaling, RRC signaling, MAC CE signaling, or PHY signaling. A threshold for power reduction in TN and a threshold for power reduction in NTN may be set independently. The threshold configuration information may include the threshold for power reduction in TN and/or the threshold for power reduction in NTN. In addition, the threshold configuration information may include a threshold commonly applied to TN and NTN (e.g., common threshold). The threshold(s) may be set independently for each network structure. The threshold configuration information may include the threshold(s) for each network structure.

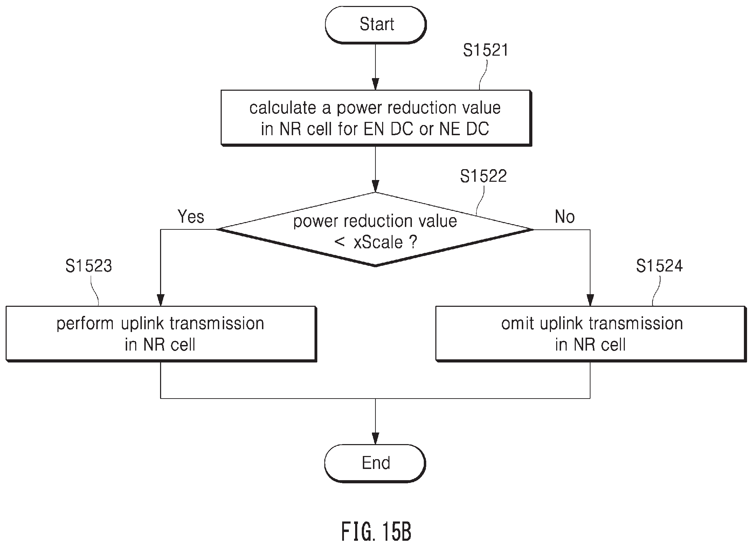

FIG. 15B is a flowchart illustrating a method for adjusting a transmission power of a terminal in a DC scenario.

Referring to FIG. 15B, a terminal may be connected to two base stations by perform EN-DC or NE-DC operations, and perform communication with the two base stations. One of the two base stations may be an NR base station, and the other base station of the two base stations may be an LTE base station. In the EN-DC scenario, the LTE base station may be a primary base station (e.g., main base station), and the NR base station may be an auxiliary base station (e.g., secondary base station). In the NE-DC scenario, the NR base station may be a primary base station (e.g., main base station), and the LTE base station may be an auxiliary base station (e.g., secondary base station).

The terminal may calculate a power reduction value of uplink transmission for DC (or CA) (S1521). In other words, the terminal may calculate a power reduction value in the NR cell for EN DC or NE DC. For example, the power reduction value may mean a difference between a transmission power in uplink communication between the terminal and one base station and a transmission power in uplink communication between the terminal and two base stations. Alternatively, the power reduction value may mean a difference between a reference transmission power in uplink communication and a transmission power in uplink communication between the terminal and two base stations. The reference transmission power may be set in the terminal by signaling from the base station (e.g., network).

The terminal may compare the power reduction value with a threshold (e.g., xScale) (S1522). If the power reduction value is less than the threshold, the terminal may perform uplink transmission in the NR cell (S1523). In other words, if the power reduction value is less than the threshold, uplink communication may be performed in the LTE cell and the NR cell. If the power reduction value is equal to or greater than the threshold, the terminal may not perform uplink transmission in the NR cell (S1524). In other words, if the power reduction value for uplink transmission power is equal to or greater than the specific threshold, the terminal may maintain uplink transmission in the LTE cell, but may not perform uplink transmission in the NR cell.

The base station (e.g., TN base station, NTN base station, network) may set the threshold for power reduction, and transmit threshold configuration information on the threshold to the terminal through signaling. The terminal may receive the threshold configuration information through signaling from the base station. The signaling may be at least one of SI signaling, RRC signaling, MAC CE signaling, or PHY signaling. A threshold for power reduction in LTE and a threshold for power reduction in NR may be set independently. The threshold configuration information may include the threshold for power reduction in LTE and/or the threshold for power reduction in NR. In addition, the threshold configuration information may include a threshold commonly applied to LTE and NR (e.g., common threshold). The threshold(s) may be set independently for each network structure. The threshold configuration information may include the threshold(s) for each network structure.

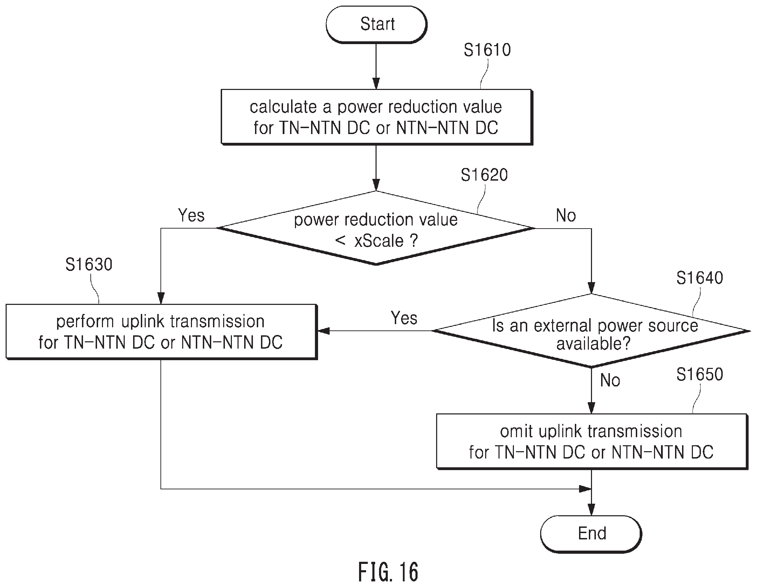

FIG. 16 is a flowchart illustrating a method for adjusting a transmission power of a terminal in a DC scenario.

Referring to FIG. 16, a terminal may perform a connection procedure with each of TN and NTN based on multi-connectivity functions. A TN-NTN DC may be formed (e.g., configured) based on the connection procedures. The terminal may perform communication (e.g., data communication) with the TN and NTN. Alternatively, the terminal may perform a connection procedure with each of NTNs based on multi-connectivity functions. An NTN-NTN DC may be formed (e.g., configured) based on the connection procedures. The terminal may perform communication (e.g., data communication) with the NTNs. One of the two base stations may be a primary base station (e.g., main base station), and the other base station of the two base stations may be an auxiliary base station (e.g., secondary base station). Based on the NR DC, a PCell and an SCell may be configured.

The terminal may calculate a power reduction value (e.g., uplink power reduction value) for the TN-NTN DC or NTN-NTN DC (S1610). For example, the power reduction value may mean a difference between a transmission power in uplink communication between the terminal and one base station and a transmission power in uplink communication between the terminal and two base stations. Alternatively, the power reduction value may mean a difference between a reference transmission power in uplink communication and a transmission power in uplink communication between the terminal and two base stations. The reference transmission power may be set in the terminal by signaling from the base station (e.g., network).

The terminal may compare the power reduction value with a threshold (e.g., xScale) (S1620). The threshold in FIG. 16 may be the same as the threshold in FIGS. 15A and/or 15B. Alternatively, the threshold in FIG. 16 may be a value set independently from the threshold in FIGS. 15A and/or 15B. The threshold in FIG. 16 may be different from the threshold in FIGS. 15A and/or 15B. If the power reduction value is less than the threshold, the terminal may perform uplink transmission for TN-NTN DC or NTN-NTN DC (S1630). In other words, if the power reduction value is not large, the terminal may maintain uplink transmission. If the power reduction value is equal to or greater than the threshold, the terminal may check whether an external power source is available (S1640). The external power source may be an additional source that the terminal can use to perform uplink transmission. The external power source may be a device capable of supplying power (e.g., relay).

If there is an available external power source, the terminal may determine that sufficient power is available for uplink transmission. Therefore, the terminal may perform uplink transmission for TN-NTN DC or NTN-NTN DC using the external power source (S1630). If there is no external power source, the terminal may omit uplink transmission for TN-NTN DC or NTN-NTN DC (S1650). In other words, the terminal may determine that the transmission power is limited and may not perform uplink transmission through the SCell configured based on DC (e.g., TN-NTN DC or NTN-NTN DC). In other words, if the power reduction value is equal to or greater than the threshold and there is no available external power source, the terminal may perform uplink communication through the PCell configured based on DC (e.g., TN-NTN DC or NTN-NTN DC), but may not perform uplink communication through the SCell configured based on DC (e.g., TN-NTN DC or NTN-NTN DC). Omitting the uplink transmission may mean stopping the uplink transmission.

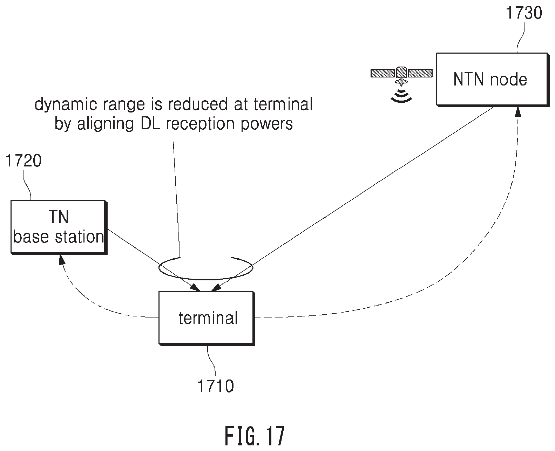

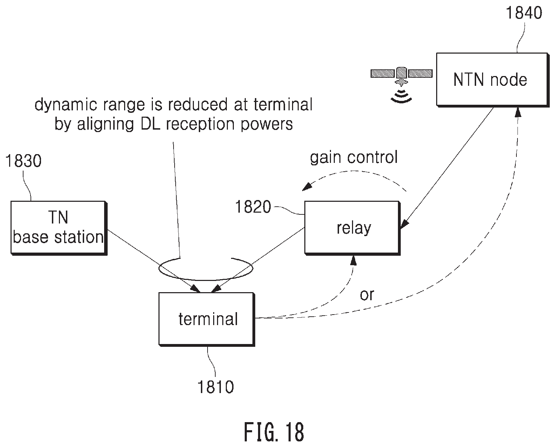

FIGS. 17 and 18 are conceptual diagrams illustrating a method for aligning downlink reception powers based on multi-connectivity.

Referring to FIGS. 17 and 18, an alignment operation of reception powers may refer to an operation of communication node(s) (e.g., base station, satellite, relay, repeater, IAB node, and/or terminal), which is performed so that reception powers of different signals fall within a preset power range (e.g., dynamic range) in the same time period or a specific time period. An alignment operation of transmission powers may refer to an operation of communication node(s) (e.g., base station, satellite, relay, repeater, IAB node, and/or terminal), which is performed so that transmission powers of different signals fall within a preset power range in the same time period or a specific time period.

Exemplary embodiments of the present disclosure may not be limited to reception power alignment and/or transmission power alignment. In other words, for exemplary embodiments of the present disclosure, a power control operation to control reception powers and/or transmission powers, a power management operation to manage reception powers and/or transmission powers, a power control operation to adjust reception powers and/or transmission powers, and/or a power reduction operations to reduce reception powers and/or transmission powers may be performed. The power alignment may have a meaning encompassing power control, power management, power regulation, and/or power reduction. Depending on a context, 'power alignment' may be interpreted as power control, power management, power regulation, or power reduction.

A terminal may perform a connection procedure with each of TN and NTN based on multi-connectivity functions. A TN-NTN DC may be formed (e.g., configured) based on the connection procedures. The terminal may perform communication (e.g., data communication) with the TN and NTN. Alternatively, the terminal may perform a connection procedure with each of NTNs based on multi-connectivity functions. An NTN-NTN DC may be formed (e.g., configured) based on the connection procedures. The terminal may perform communication (e.g., data communication) with the NTNs. One of the two base stations may be a primary base station (e.g., main base station), and the other base station among the two base stations may be an auxiliary base station (e.g., secondary base station). Based on NR DC, a PCell and an SCell may be configured.

The terminal may simultaneously receive downlink signals from different base stations based on DC. The terminal may align downlink reception powers to simultaneously receive the downlink signals. In the exemplary embodiment of FIG. 17, the terminal 1710 may be connected to a TN base station 1720 and an NTN node (e.g., NTN base station) 1730 by performing TN-NTN DC operations. The terminal 1710 may simultaneously receive downlink signals from the TN base station 1710 and the NTN node 1730. The terminal 1710 may perform an alignment operation of downlink reception powers to minimize a difference in the reception powers in order to reduce a dynamic range of received signals. To perform the alignment operation of downlink reception powers, the terminal 1710 may report channel state information (CSI) for the NTN link (e.g., link between the terminal 1710 and the NTN node 1730).

In other words, the terminal 1710 may transmit information element(s) (e.g., CSI and/or information on a dynamic range desired by the terminal 1710) required for the alignment operation of downlink reception powers to the TN base station 1720 and/or the NTN node 1730. The operation of the terminal 1710 transmitting the information element(s) required for the alignment operation of downlink reception powers may mean a request for aligning downlink reception powers. The CSI report may be transmitted to the TN base station 1720 and/or NTN node 1730. CSI may include at least one of a reference signal received power (RSRP), reference signal strength indicator (RSSI), signal to interference plus noise ratio (SINR) (e.g., L1-SINR), channel quality indicator (CQI), or other information.

The terminal 1710 may report information on a desired (e.g., requested or preferred) dynamic range for downlink reception of TN-NTN DC (or NTN-NTN DC). The dynamic range may refer to a reception power section (e.g., reception power range). Information on the desired dynamic range may be transmitted to the TN base station 1720 and/or the NTN node 1730. In other words, the terminal 1710 may report information on the desired dynamic range considering a reception capability of the terminal 1710. The base station (e.g., network, TN base station, NTN node) may set a dynamic range for downlink reception for TN-NTN DC (or NTN-NTN DC), and transmit information on the set dynamic range to the terminal 1710. The dynamic range may be set based on the information on the desired dynamic range received from the terminal 1710. The terminal 1710 may obtain information on the dynamic range set by the base station (e.g., network).

The TN base station 1720 and/or the NTN node 1730 may transmit downlink signals based on the configured information. In other words, the TN base station 1720 and/or the NTN node 1730 may determine a transmission power of the downlink signals so that the reception powers of the downlink signals fall within the desired dynamic range at the terminal 1710, and transmit the downlink signals to the terminal 1710 using the determined transmission power. Specifically, the TN base station 1720 and/or the NTN node 1730 may estimate a path loss of the downlink signal based on the CSI reported by the terminal 1710, and may determine the transmission power of the downlink signals considering the estimated path loss, so that reception powers of the downlink signals at the terminal 1710 fall with the desired dynamic range. The terminal 1710 may align the reception powers for downlink signals received from the TN base station 1720 and the NTN node 1730 based on the configured information. The terminal 1710 may expect that the reception powers for downlink signals received from the TN base station 1720 and the NTN node 1730 fall within the desired dynamic range. In other words, the terminal 1710 may receive signals having reception powers that fall within the reception power range set by the TN base station 1720 and/or the NTN node 1730 from the TN base station 1720 and the NTN node 1730. FIG. 17 shows the TN-NTN DC scenario, but the reception power alignment method described above may be applied equally or similarly to the NTN-NTN DC scenario as well as the TN-NTN DC scenario.

In the exemplary embodiment of FIG. 18, a terminal 1810 may be connected to an NTN node 1840 via a relay 1820. The relay 1820 may receive a downlink signal (e.g., downlink data) of the terminal 1810 from the NTN node 1840 and transmit the downlink signal to the terminal 1810. The relay 1820 may transmit the downlink signal of the NTN node 1840 to the terminal 1810 by performing gain control. The terminal 1810 may receive the downlink signal from the NTN node 1840 via the relay 1820. The relay 1820 may receive an uplink signal (e.g., uplink data) of the NTN node 1840 from the terminal 1810 and transmit the uplink signal to the NTN node 1840. The relay 1820 may transmit the uplink signal of the terminal 1810 to the NTN node 1840 by performing gain control. The NTN node 1840 may receive the uplink signal from the terminal 1810 via the relay 1820.

In the DC environment (e.g., DC scenario), the terminal may align downlink reception powers to simultaneously receive downlink signals. The terminal 1810 may be connected to each of the TN base station 1830 and the NTN node (e.g., NTN base station) 1840 by performing TN-NTN DC operations. The terminal 1810 may simultaneously receive downlink signals (e.g., downlink data) from the TN base station 1830 and the NTN node 1840. The downlink signal transmitted by the NTN node 1840 may be delivered to the terminal 1810 via the relay 1820.

The terminal 1810 may perform an alignment operation of downlink reception powers so that a difference in reception powers between received signals is minimized. The alignment operation of downlink reception powers may be performed to reduce a dynamic range. In order to perform the alignment operation of downlink reception powers, the terminal 1810 may report CSI for the NTN link (e.g., a link of 'terminal 1810 - NTN node 1840' and/or a link of 'terminal 1810 - relay 1820 - NTN node 1840'). In addition, CSI for the TN link as well as CSI for the NTN link may be reported. The CSI report may be transmitted to the TN base station 1720 and/or NTN node 1730. The CSI may include at least one of RSRP, RSSI, SINR (e.g., L1-SINR), CQI, or other information.

The terminal 1810 may report information on a desired dynamic range (e.g., reception power range) for downlink reception of TN-NTN DC (or NTN-NTN DC). The information on the desired dynamic range may be transmitted to the TN base station 1830 and/or the NTN node 1840. In other words, the terminal 1810 may report information on the desired dynamic range considering a reception capability of the terminal 1810. The base station (e.g., network, TN base station, NTN node) may set a dynamic range for downlink reception for TN-NTN DC (or NTN-NTN DC), and transmit information on the set dynamic range to the terminal 1810. The dynamic range may be set based on the information on the desired dynamic range received from the terminal 1810. The terminal 1810 may obtain information on the dynamic range set by the base station (e.g., network).

The TN base station 1830, NTN node 1840, and/or relay 1820 may transmit downlink signals based on the configured information. In other words, the TN base station 1830, NTN node 1840, and/or relay 1820 may transmit the downlink signals by adjusting a transmission power (e.g., gain), so that reception powers of the downlink signals at the terminal fall within the set dynamic range. The terminal 1810 may align reception powers for the downlink signals received from the TN base station 1830, the NTN node 1840, and/or the relay 1820 based on the configured information. In other words, the terminal 1810 may receive the downlink signals having reception powers falling within the set dynamic range from the TN base station 1830, the NTN node 1840, and/or the relay 1820.

The terminal 1810 may indicate the relay 1820 to control the gain by directly transmitting the CSI for the NTN link and/or information on the desired dynamic range to the relay 1820. In other words, the relay 1820 may receive the CSI for the NTN link and/or the information on the desired dynamic range from the terminal 1810, and may control the gain (e.g., transmission power) based on the information on the CSI for the NTN link and/or the information on the desired dynamic range.

As another method, the terminal 1810 may transmit the CSI for the NTN link and/or the information on the desired dynamic range to the NTN node 1840. The NTN node 1840 may control the gain (e.g., transmission power) of the relay 1820 based on the CSI for the NTN link and/or the information on the desired dynamic range received from the terminal 1810. In other words, the NTN node 1840 may transmit gain control information to the relay 1820, and the relay 1820 may control the gain based on the gain control information. FIG. 18 shows the TN-NTN DC scenario, but the reception power alignment method described above may be applied equally or similarly to the NTN-NTN DC scenario as well as the TN-NTN DC scenario.

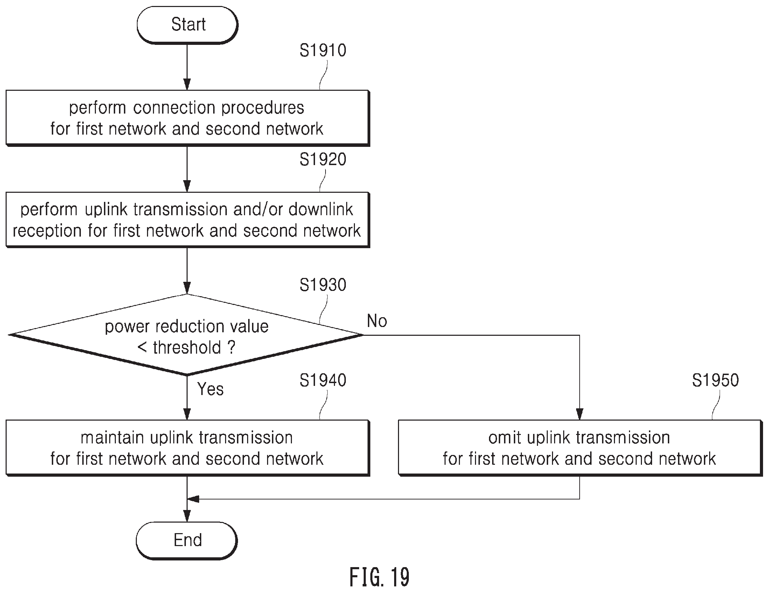

FIG. 19 is a flowchart illustrating a method for controlling uplink transmission based on multi-connectivity.

Referring to FIG. 19, a terminal may perform a connection procedure with each of a first network (e.g., first base station) and a second network (e.g., second base station) based on multi-connectivity functions (S1910). Each of the first network and the second network may be TN or NTN. The terminal may perform TN-NTN DC operations or NTN-NTN DC operations. The terminal may form (e.g., establish) a link with each of the first network and the second network, and perform uplink communication (e.g., uplink transmission operation) and/or downlink communication (e.g., downlink reception operation) in the formed link (S1920).

The terminal may compare a power reduction value (e.g., uplink transmission power reduction value) for the first network and/or the second network with a threshold (S1930). For example, the power reduction value may mean a difference between a transmission power in uplink communication between the terminal and one network and a transmission power in uplink communication between the terminal and two networks. Alternatively, the power reduction value may mean a difference between a reference transmission power in uplink communication and a transmission power in uplink communication between the terminal and two networks. The reference transmission power may be set in the terminal by signaling from the base station (e.g., network).

If the power reduction value (e.g., transmission power reduction value) is less than the threshold, the terminal may maintain uplink transmission for the first network and/or the second network (S1940). In other words, the terminal may continue to perform uplink transmission for the first network and/or the second network. If the power reduction value (e.g., transmission power reduction value) is equal to or greater than the threshold, the terminal may omit uplink transmission for the first network and/or the second network (S1950). In other words, the terminal may omit uplink transmission for the SCell of the first network and/or the second network. Omitting uplink transmission may mean not performing the uplink transmission. In other words, omitting uplink transmission may mean stopping the uplink transmission. If the power reduction value (e.g., transmission power reduction value) is equal to or greater than the threshold, the terminal may omit uplink transmission for one of the SCell of the first network or the SCell of the second network. Even if the power reduction value (e.g., transmission power reduction value) is equal to or greater than the threshold, uplink communication may be maintained in the PCell of the first network and/or the second network. The exemplary embodiment of FIG. 19 may be the same or similar to the exemplary embodiment of FIG. 16.

The base station (e.g., TN base station, NTN base station, network) may set the threshold for power reduction and transmit threshold configuration information on the set threshold to the terminal through signaling. The terminal may receive the threshold configuration information through signaling from the base station. The signaling may be at least one of SI signaling, RRC signaling, MAC CE signaling, or PHY signaling. A threshold for power reduction in TN and a threshold for power reduction in NTN may be set independently. The threshold configuration information may include the threshold for power reduction in TN and/or the threshold for power reduction in NTN. In addition, the threshold configuration information may include a threshold commonly applied to TN and NTN (e.g., common threshold). The threshold(s) may be set independently for each network structure. The threshold configuration information may include the threshold(s) for each network structure.

The first network may be a TN, and the second network may be an NTN. Alternatively both the first network and the second network may be NTNs. The first network and the second network may have different structures. The structures of the first network and the second network may be configured independently. The network structure may mean component carrier (CC) configuration, carrier group (CG) configuration, and/or cell configuration. The CC configurations, CG configurations, and/or cell configurations in the first network and the second network may be determined independently. At least one of CC configurations, CG configurations, or cell configurations may be different in the first network and the second network. A network structure for uplink transmission and a network structure for downlink transmission may be determined independently. The network structure for uplink transmission and the network structure for downlink transmission may be configured differently. In other words, the network structure may be configured independently depending on a link direction (e.g., uplink, downlink).

The network structure may vary depending on a satellite type (e.g., transparent type, regenerative type) and/or presence or absence of the relay. A first network structure (e.g., first type of network structure) may include a transparent-type satellite. In the first network structure, the terminal may establish a link with the transparent-type satellite. In other words, a link between the terminal and the base station may be formed by the transparent-type satellite. The first network structure may be the network structure shown in FIG. 9A. A second network structure (e.g., second type of network structure) may include a regenerative-type satellite. In the second network structure, the terminal may establish a link with the regenerative-type satellite. The second network structure may be the network structure shown in FIG. 9B.

A third network structure (e.g., third type of network structure) may include a transparent-type satellite and a relay. In the third network structure, the terminal may establish a link with the relay, the relay may establish a link with the transparent-type satellite, and a link between the relay and the base station may be established by the transparent-type satellite. The third network structure may be the network structure shown in FIG. 9C. A fourth network structure (e.g., fourth type of network structure) may include a regenerative-type satellite and a relay. In the fourth network structure, the terminal may establish a link with the relay, and the relay may establish a link with the regenerative-type satellite. The fourth network structure may be the network structure shown in FIG. 9D.

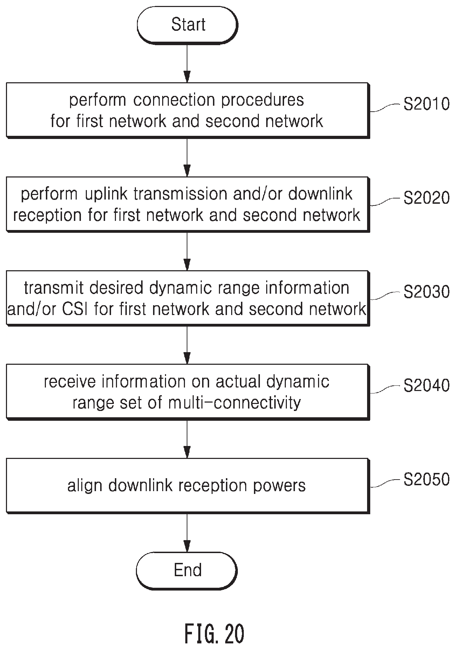

FIG. 20 is a flowchart illustrating a method for controlling a downlink reception power based on multi-connectivity.

Referring to FIG. 20, a terminal may perform a connection procedure with each of a first network (e.g., first base station) and a second network (e.g., second base station) based on multi-connectivity functions (S2010). Each of the first network and the second network may be TN or NTN. The terminal may perform TN-NTN DC operations or NTN-NTN DC operations. The terminal may form (e.g., establish) a link with each of the first network and the second network, and perform uplink communication (e.g., uplink transmission operation) and/or downlink communication (e.g., downlink reception operation) through the formed link (S2020).

If the first network is TN and the second network is NTN, the terminal may transmit CSI and/or information on a dynamic range for downlink reception power to the second network (S2030). In other words, in step S2030, the terminal may transmit information (e.g., CSI and/or information on a dynamic range desired by the terminal) required for alignment of reception powers for downlink signals to the first network and/or the second network. The information required for aligning reception powers for downlink signals may be transmitted to a network (e.g., the first network and/or the second network) that transmitted a downlink signal that does not fall within the dynamic range desired by the terminal..

The CSI may be measured on the link between the terminal and the second network. Alternatively, the CSI may include not only measurement information on the link between the terminal and the second network, but also measurement information on the link between the terminal and the first network. The dynamic range may be a dynamic range for downlink reception powers for multi-connectivity. In other words, the dynamic range may be a reception power section (e.g., reception power range). The second network may receive the CSI and/or information on a dynamic range for downlink reception powers from the terminal. The second network may identify (e.g., configure) an actual dynamic range based on the information received from the terminal and transmit information on the actual dynamic range (e.g., reception power section) to the terminal.

The terminal may obtain information on the actual dynamic range from the second network (S2040). Alternatively, if the information required for aligning reception powers for downlink signals is transmitted to the first network and/or the second network, the terminal may obtain information on the actual dynamic range from the first network and/or the second network. The terminal may align downlink reception powers (S2050). In this case, the terminal may align downlink reception powers based on the actual dynamic range. The first network and/or the second network may adjust a gain (e.g., transmission power) based on the CSI and/or information on the dynamic range for downlink reception powers received from the terminal, and transmit downlink signals based on the adjusted gain. In other words, the second network may transmit downlink signals so that downlink reception powers at the terminal fall within the actual dynamic range. The terminal may receive downlink signals having reception powers within the actual dynamic range from the first network and/or the second network. The terminal may expect that the reception powers of the downlink signals fall within the actual dynamic range. In other words, the terminal may expect to receive downlink signals with aligned powers. The exemplary embodiment of FIG. 20 may be the same or similar to the exemplary embodiment of FIG. 17 and/or FIG. 18.

The first network may be TN, and the second network may be NTN. Alternatively, both the first network and the second network may be NTNs. The first network and the second network may have different structures. A structure of the first network and a structure of the second network may be configured independently. The network structure may mean CC configuration, CG configuration, and/or cell configuration. The CC configurations, CG configurations, and/or cell configurations in the first network and the second network may be determined independently. At least one of the CC configurations, CG configurations, or cell configurations may be different in the first network and the second network. A network structure for uplink transmission and a network structure for downlink transmission may be determined independently. The network structure for uplink transmission and the network structure for downlink transmission may be configured differently. In other words, the network structure may be configured independently depending on a link direction (e.g., uplink, downlink).

The network structure may vary depending on a satellite type (e.g., transparent type, regenerative type) and/or presence or absence of the relay. A first network structure (e.g., first type of network structure) may include a transparent-type satellite. In the first network structure, the terminal may establish a link with the transparent-type satellite. In other words, a link between the terminal and the base station may be formed by the transparent-type satellite. The first network structure may be the network structure shown in FIG. 9A. A second network structure (e.g., second type of network structure) may include a regenerative- type satellite. In the second network structure, the terminal may establish a link with the regenerative-type satellite. The second network structure may be the network structure shown in FIG. 9B.

A third network structure (e.g., third type of network structure) may include a transparent-type satellite and a relay. In the third network structure, the terminal may establish a link with the relay, the relay may establish a link with the transparent-type satellite, and a link between the relay and the base station may be established by the transparent-type satellite. The third network structure may be the network structure shown in FIG. 9C. A fourth network structure (e.g., fourth type of network structure) may include a regenerative-type satellite and a relay. In the fourth network structure, the terminal may establish a link with the relay, and the relay may establish a link with the regenerative-type satellite. The fourth network structure may be the network structure shown in FIG. 9D.

The order of steps in the exemplary embodiments is not limited to the order described in this disclosure. Multiple steps may be performed simultaneously, some steps may be omitted, additional steps may be included, and the steps may be performed in a different order.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1.  A method of a terminal, comprising:

    performing a connection procedure with each of a first network and a second network based on a multi-connectivity function;
    performing uplink communication with the first network and the second network;
    calculating a power reduction value of the uplink communication for at least one of the first network or the second network; and
    deciding whether to perform the uplink communication based on the power reduction value.

2.  The method according to claim 1, wherein when the power reduction value is less than a threshold, the uplink communication is determined to continue to be performed, and when the power reduction value is equal to or greater than the threshold, the uplink communication is determined to be stopped.

3.  The method according to claim 2, wherein the stopped uplink communication is at least one of uplink communication in a secondary cell (SCell) of the first network or uplink communication in an SCell of the second network.

4.  The method according to claim 2, further comprising: receiving configuration information of the threshold from at least one of the first network or the second network,
    wherein the configuration information includes at least one of a first threshold for the first network, a second threshold for the second network, or a common threshold for both the first network and the second network.

5.  The method according to claim 1, further comprising: in response to the power reduction value being greater than a threshold, determining whether an external power source is available,

wherein when the external power source is available, the uplink communication is performed using the external power source, and when the external power source is not available, the uplink communication is stopped.

6.  The method according to claim 1, wherein each of the first network and the second network is a terrestrial network (TN) or a non-terrestrial network (NTN).

7.  The method according to claim 1, wherein network structures of the first network and the second network are determined independently, and the network structure is determined based on at least one of component carrier (CC) configuration, carrier group (CG) configuration, cell configuration, satellite type, presence or absence of a relay, or link direction.

8.  The method according to claim 6, wherein a link between the terminal and a transparent-type satellite is established in a first type of the network structure, a link between the terminal and a regenerative-type satellite is established in a second type of the network structure, a link between the terminal and a relay and a link between the relay and a transparent-type satellite are established in a third type of the network structure, and a link between the terminal and a relay and a link between the relay and a regenerative-type satellite are established in a fourth type of the network structure.

9.  A method of a terminal, comprising:

    performing a connection procedure with each of a first network and a second network based on a multi-connectivity function;
    performing downlink communication with the first network and the second network;
    transmitting necessary information for aligning reception powers for the downlink communication to at least one of the first network and the second network;
    receiving information on a reception power range from at least one of the first network or the second network; and
    receiving signals having reception powers falling within the reception power range from the first network and the second network.

10. The method according to claim 9, wherein the necessary information includes at least one of channel state information (CSI) or information on a reception power range desired by the terminal.

11. The method according to claim 9, wherein when the first network is a terrestrial network (TN) and the second network is a non-terrestrial network (NTN), the necessary information is transmitted to the second network.

12. The method according to claim 9, wherein network structures of the first network and the second network are determined independently, and the network structure is determined based on at least one of component carrier (CC) configuration, carrier group (CG) configuration, cell configuration, satellite type, presence or absence of a relay, or link direction.

13. The method according to claim 12, wherein a link between the terminal and a transparent-type satellite is established in a first type of the network structure, a link between the terminal and a regenerative-type satellite is established in a second type of the network structure, a link between the terminal and a relay and a link between the relay and a transparent-type satellite are established in a third type of the network structure, and a link between the terminal and a relay and a link between the relay and a regenerative-type satellite are established in a fourth type of the network structure.

14. A terminal comprising at least one processor, wherein the at least one processor causes the terminal to perform:

    performing a connection procedure with each of a first network and a second network based on a multi-connectivity function;
    performing uplink communication with the first network and the second network;
    calculating a power reduction value of the uplink communication for at least one of the first network or the second network; and
    deciding whether to perform the uplink communication based on the power reduction value.

15. The terminal according to claim 14, wherein when the power reduction value is less than a threshold, the uplink communication is determined to continue to be performed, and when the power reduction value is equal to or greater than the threshold, the uplink communication is determined to be stopped.

16. The terminal according to claim 15, wherein the stopped uplink communication is at least one of uplink communication in a secondary cell (SCell) of the first network or uplink communication in an SCell of the second network.

17. The terminal according to claim 14, wherein the at least one processor further causes the terminal to perform: in response to the power reduction value being greater than a threshold, determining whether an external power source is available,
wherein when the external power source is available, the uplink communication is performed using the external power source, and when the external power source is not available, the uplink communication is stopped.

18. The terminal according to claim 14, wherein the at least one processor further causes the terminal to perform:

performing downlink communication with the first network and the second network;
transmitting necessary information for aligning reception powers for the downlink communication to at least one of the first network and the second network;
receiving information on a reception power range from at least one of the first network or the second network; and
receiving signals having reception powers falling within the reception power range from the first network and the second network.

19. The terminal according to claim 18, wherein the necessary information includes at least one of channel state information (CSI) or information on a reception power range desired by the terminal.

20. The terminal according to claim 18, wherein when the first network is a terrestrial network (TN) and the second network is a non-terrestrial network (NTN), the necessary information is transmitted to the second network.

FIG. 1

200

FIG. 2

300

FIG. 3

<u>400</u>

frame

slot — 410

430

#0  · · ·  #($N_{slot}^{subframe,\mu} - 1$)  · · ·  #($N_{slot}^{frame,\mu} - 1$)

420

subframe

FIG. 4

downlink frame #i — 500

uplink frame #i — 510

520

$T_{TA}$

FIG. 5

600

1 slot

$N_{sym}$ OFDM symbols

...
...

RB
(Resource block)
610

RE
(Resource element)
620

$N_{grid}^{size,\mu} N_{SC}^{RB}$
subcarriers

$N_{SC}^{RB}$
subcarriers

...
...

l = 0

l = 13

FIG. 6

FIG. 7

FIG. 8

FIG. 9A

FIG. 9B

FIG. 9C

FIG. 9D

FIG. 10A

FIG. 10B

tight coordination is enabled
by tight TN/NTN integration

TN spectrum

NTN spectrum

FIG. 11

FIG. 12

FIG. 13A

FIG. 13B

EP 4 753 363 A1

FIG. 14

```
                          ┌─────────┐
                          │  Start  │
                          └─────────┘
                               │
                               ▼                           S1511
          ┌────────────────────────────────────────┐
          │   calculate a power reduction value     │
          │          in SCell for NR DC             │
          └────────────────────────────────────────┘
                               │
                               ▼                    S1512
                          ╱─────────────╲
                  Yes   ╱  power reduction  ╲   No
          ◄──────────── │   value  < xScale ? │ ────────────►
                        ╲                 ╱
                          ╲─────────────╱
       S1513      │                              │      S1514
                  ▼                              ▼
   ┌──────────────────────────┐    ┌──────────────────────────┐
   │ perform uplink transmission│    │  omit uplink transmission │
   │     in SCell for NR DC     │    │     in SCell for NR DC    │
   └──────────────────────────┘    └──────────────────────────┘
                  │                              │
                  └──────────────┬───────────────┘
                                 ▼
                           ┌─────────┐
                           │   End   │
                           └─────────┘
```

FIG. 15A

```
              ( Start )

                  |                         S1521
                  v
        +---------------------------+
        | calculate a power reduction value |
        |   in NR cell for EN DC or NE DC   |
        +---------------------------+

                  |                         S1522
                  v
      Yes      / power reduction value \      No
    <---------<      < xScale ?          >--------->
              \                        /
               _____/

S1523           |                              |           S1524
     v                                              v
+---------------------------+        +---------------------------+
|  perform uplink transmission  |        |   omit uplink transmission   |
|         in NR cell            |        |         in NR cell           |
+---------------------------+        +---------------------------+

                  |                              |
                  +--------------+---------------+
                                 |
                                 v
                              ( End )
```

FIG. 15B

Start

S1610

calculate a power reduction value
for TN-NTN DC or NTN-NTN DC

S1620

power reduction value
< xScale ?

Yes

No

S1630

perform uplink transmission
for TN-NTN DC or NTN-NTN DC

Yes

S1640

Is an external power source
available?

No

S1650

omit uplink transmission
for TN-NTN DC or NTN-NTN DC

End

FIG. 16

1730

NTN node

dynamic range is reduced at terminal
by aligning DL reception powers

1720

TN
base station

terminal

1710

FIG. 17

1840

NTN node

dynamic range is reduced at terminal
by aligning DL reception powers

1830

gain control

TN
base station

1820

relay

terminal

or

1810

FIG. 18

FIG. 19

EP 4 753 363 A1

Start

perform connection procedures
for first network and second network — S2010

perform uplink transmission and/or downlink
reception for first network and second network — S2020

transmit desired dynamic range information
and/or CSI for first network and second network — S2030

receive information on actual dynamic
range set of multi-connectivity — S2040

align downlink reception powers — S2050

End

FIG. 20

## INTERNATIONAL SEARCH REPORT

| | International application No. |
|---|---|
| | **PCT/KR2024/009648** |

### A. CLASSIFICATION OF SUBJECT MATTER

**H04W 76/15**(2018.01)i; **H04W 72/12**(2009.01)i; **H04W 72/50**(2023.01)i; **H04W 72/1263**(2023.01)i; **H04W 84/06**(2009.01)i; **H04W 88/06**(2009.01)i

According to International Patent Classification (IPC) or to both national classification and IPC

### B. FIELDS SEARCHED

Minimum documentation searched (classification system followed by classification symbols)

H04W 76/15(2018.01); H04B 7/14(2006.01); H04W 68/02(2009.01); H04W 76/14(2018.01); H04W 8/24(2009.01); H04W 84/14(2009.01); H04W 88/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다중 연결(multiple connections), 제1-제2 네트워크(first and second networks), 전력 감소(power reduction), 수신 전력 구간(reception power range), 지상 네트워크(terrestrial network, TN), 비지상 네트워크(non-terrestrial network, NTN)

### C. DOCUMENTS CONSIDERED TO BE RELEVANT

| Category* | Citation of document, with indication, where appropriate, of the relevant passages | Relevant to claim No. |
|---|---|---|
| Y | LOCKHEED MARTIN et al. Use Case on a UAV UE connecting to TN+NTN access networks. S1-230236, 3GPP TSG-SA WG1 Meeting #101. Athens, Greece. 10 February 2023.<br>See sections 5.x.1 - 5.x.4; and figure 5.x.1. | 1-20 |
| Y | CATT. Discussion on SCell Radio Link Monitoring. R4-103876, 3GPP TSG-RAN WG4 Meeting AH#04. 12 October 2010.<br>See sections 1 and 2. | 1-8,14-20 |
| Y | US 2019-0036595 A1 (NEC CORP.) 31 January 2019 (2019-01-31)<br>See paragraphs [0072]-[0100]. | 5,17 |
| Y | US 2023-0093240 A1 (HUAWEI TECHNOLOGIES CO., LTD.) 23 March 2023 (2023-03-23)<br>See paragraphs [0049]-[0067]; and figure 2. | 7,8,12,13 |
| Y | KR 10-2004-0007073 A (LG ELECTRONICS INC.) 24 January 2004 (2004-01-24)<br>See paragraphs [0021]-[0035]. | 9-13,18-20 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 October 2024** | **30 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/009648**

| Patent document cited in search report | | | Publication date (day/month/year) | Patent family member(s) | | | Publication date (day/month/year) |
|---|---|---|---|---|---|---|---|
| US | 2019-0036595 | A1 | 31 January 2019 | WO | 2017-130593 | A1 | 03 August 2017 |
| US | 2023-0093240 | A1 | 23 March 2023 | CN | 113747570 | A | 03 December 2021 |
| | | | | EP | 4145923 | A1 | 08 March 2023 |
| | | | | WO | 2021-238351 | A1 | 02 December 2021 |
| | | | | WO | 2021-238766 | A1 | 02 December 2021 |
| KR | 10-2004-0007073 | A | 24 January 2004 | CN | 1277428 | C | 27 September 2006 |
| | | | | CN | 1482822 | A | 17 March 2004 |
| | | | | KR | 10-0491885 | B1 | 30 May 2005 |

Form PCT/ISA/210 (patent family annex) (July 2022)

**EP 4 753 363 A1**

**REFERENCES CITED IN THE DESCRIPTION**

**Patent documents cited in the description**

- KR 1020230096088